# EUROPÄISCHE PATENTSCHRIFT

(11) **EP 2 524 184 B1**
(45) Veröffentlichungstag und Bekanntmachung des Hinweises auf die Patenterteilung: **22.01.2014**
(21) Anmeldenummer: 10809270.1
(22) Anmeldetag: 17.12.2010
(51) Int. Cl.: F28D 7/00, F28D 7/16, F28F 9/02

(54) **UHT-ANLAGE UND VERFAHREN ZUR WÄRMEBEHANDLUNG VON TEMPERATURSENSIBLEN LEBENSMITTELPRODUKTEN**
UHT SYSTEM AND METHOD FOR HEAT TREATING TEMPERATURE-SENSITIVE FOOD PRODUCTS
INSTALLATION À TEMPÉRATURE ULTRA-ÉLEVÉE ET PROCÉDÉ POUR LE TRAITEMENT THERMIQUE DE PRODUITS ALIMENTAIRES SENSIBLES À LA TEMPÉRATURE

(30) Priorität: 13.01.2010 DE 102010004418
(43) Veröffentlichungstag der Anmeldung: 21.11.2012
(73) Patentinhaber: GEA TDS GmbH, 31157 Sarstedt (DE)
(72) Erfinder: TACKE, Ludger, 46342 Velen (DE); BUSCH, Norbert, 46325 Borken (DE); ZIMMERMANN, Dietrich, 96103 Hallstadt (DE); ASSING, Hubert, 48683 Ahaus (DE); SCHWENZOW, Uwe, 48683 Ahaus (DE); SCHLAG, Brigitte, 48653 Coesfeld (DE)
(74) Vertreter: Hauck Patent- und Rechtsanwälte
(86) Internationale Anmeldenummer: PCT/EP2010/007765
(87) Internationale Veröffentlichungsnummer: WO 2011/085784

(56) Entgegenhaltungen:
- DE-A1-102005 007 557
- DE-U1- 9 403 913

## Beschreibung

### TECHNISCHES GEBIET

Die Erfindung betrifft eine UHT-Anlage zur Wärmebehandlung von temperatursensiblen Lebensmittelprodukten, insbesondere Desserts oder dessertartige Produkten, mit einer Vorerhitzerzone, die wenigstens einen ersten Wärmeaustauscher aufweist, der/die einerseits über eine Produktleitung mit dem zu erwärmenden Lebensmittelprodukt und andererseits über eine erste Kreislaufleitung mit einem regenerativ generierten ersten Heizmedium beaufschlagt ist/sind, mit einer, bezogen auf die Strömungsrichtung des Lebensmittelprodukts, oberstromig des ersten Wärmeaustauschers sich an letzteren anschließenden Hocherhitzerzone, die wenigstens einen zweiten Wärmeaustauscher aufweist, der/die einerseits über die Produktleitung mit dem Lebensmittelprodukt und andererseits über eine zweite Kreislaufleitung mit einem zweiten Heizmedium beaufschlagt ist/sind, mit einem ersten Leitungsabschnitt, der einen Abschnitt der ersten Kreislaufleitung bildet und der dem ersten Wärmeaustauscher der Vorerhitzerzone das erste Heizmedium zuführt, und mit einem zweiten Leitungsabschnitt, der einen weiteren Abschnitt der sich fortsetzenden ersten Kreislaufleitung bildet und der aus dem ersten Wärmeaustauscher der Vorerhitzerzone das erste Heizmedium abführt, wobei die produktführenden Wärmeaustauscher der Vor- und Hocherhitzerzone jeweils als. Rohrbündel-Wärmeaustauscher mit jeweils wenigstens einem Rohrbündel ausgebildet sind und wobei das jeweilige Rohrbündel aus einer Gruppe von parallel geschalteten, innenseits jeweils produktdurchströmten Innenrohren besteht. Darüber hinaus betrifft die Erfindung ein Verfahren zur Wärmebehandlung von temperatursensiblen Lebensmittelprodukten der vorg. Art in einer UHT-Anlage.

DE-A1-10 2005 007557 beschreibt eine UHT-Anlage mit den Merkmalen des Oberbegriffes des Patentanspruchs 1.

### STAND DER TECHNIK

Unter einem UHT-Verfahren (UHT: Ultra-Hoch-Temperatur) mit indirekter Produktbeheizung durch Wärmeaustausch mittels eines Wärmeträgermediums an einer Wand versteht man eine thermische Produktbehandlung, welche auch aseptische Erhitzung genannt wird, bei der so gut wie alle Mikroorganismen, mindestens jedoch alle zur Verderbnis führenden Mikroorganismen, abgetötet werden, die während der Lagerphase des Produktes bei Raumtemperatur heranwachsen können. Demnach müssen alle Mikroorganismen mit Ausnahme einiger, eventuell den Erhitzungsprozess überlebender hitzeresistenter Sporen abgetötet werden. Diese dürfen jedoch bei normaler Raumtemperatur während der Lagerphase lediglich bis zu einem definierten Wert heranwachsen.

Die indirekte Produktbeheizung durch einen Wärmeaustausch an einer Wand kann sowohl mit sogenannten Platten-Wärmeaustauscheranlagen oder auch, wie in der nachfolgend beschriebenen Erfindung, mit sogenannten Rohrbündel-Wärmeaustauschern erfolgen, bei denen die Wärmenergie durch die Rohrwände einer Gruppe von Innenrohren übertragen wird. Dabei strömt das zu behandelnde Lebensmittelprodukt in den Innenrohren, während ein Wärmeträgermedium, nachfolgend im Rahmen der Erfindung auch als Heizmedium bezeichnet, in der Regel Wasser oder Dampf, im Ringspaltraum des Mantelrohres, welches die parallel geschalteten Innenrohre umgibt, im Gegenstrom strömt. Ein diesbezüglicher Rohrbündel-Wärmeaustauscher ist aus der DE 94 03 913 U1 bekannt.

Eine bekannte, handelsübliche UHT-Erhitzungsvorrichtung mit indirekter Produktbeheizung zur Herstellung einer UHT-Milch beinhaltet einen Vorwärmer in einer sog. Vorwärmzone für die Erwärmung der standardisierten Milch. Anschließend wird die Milch zumeist über einen sog. Homogenisator zur Fettfeinverteilung geführt und danach weiter vorgewärmt. Es folgt eine sog. Vorheißhaltung zur Stabilisierung der Milchproteine. Nach einem weiteren Wärmeaustauscher, der für den nachfolgenden Milcherhitzungsprozess vorgesehen ist, erfolgt danach die eigentliche UHT-Erhitzung in einer sog. Erhitzerzone mit Heißhaltung, anschließend die Kühlung in einer sog. Abkühlzone unter Wärmeaustausch mit einem sog. "regenerativen" Wärmeträgermedium. Falls beispielsweise mit der UHT-Erhitzungsvorrichtung auch UHT-Sahne hergestellt werden soll, wird der Abkühlzone eine Nachkühlzone nachgeordnet, die nicht in den regenerativen Wärmeaustausch einbezogen ist.

Unter einem "regenerativen" Wärmeträgermedium, mit dem ein sog. "regenerativer" Wärmeaustausch durchgeführt wird, soll im Folgenden ein solches Wärmeträgermedium verstanden werden, welches im Kreislauf geführt wird und, bezogen auf die Fließrichtung des zu behandelnden Lebensmittelproduktes, hinter einem Erhitzerheißhalter Wärmeenergie aus dem Produkt aufnimmt und diese vor dem Erhitzerheißhalter an das Produkt "regenerative" überträgt. Auf die Anführungszeichen wird nachfolgend im Zusammenhang mit der Klassifizierung "regenerativ" durchgehend verzichtet. Als Wärmeträgermedium fungiert in der Regel grundsätzlich Wasser, welches im Kreislauf geführt wird und entsprechend dem Temperatur-Zeit-Verlauf im Milchvorlauf bei höherer Temperatur im Gegenstrom die Milch erhitzt und im Rücklauf der Milch diese ebenfalls im Gegenstrom abkühlt. Bei diesem Wärmeaustausch können bis zu 90 % der eingesetzten Energie zurückgewonnen werden. Dabei ist der UHT-Erhitzer von diesem regenerativen Wärmeaustausch ausgenommen und die notwendige Restaufheizung erfolgt hier durch indirekte Erhitzung bei Umleitung des Wasserkreislaufs (Prinzip FINNAH, Ahaus; H. G. KESSLER, Molkereiverfahrenstechnik, München-Weihenstephan, 3. Auflage, 1988).

In der DE 10 2005 007 557 A1 sind ein Verfahren und eine UHT-Anlage zur Herstellung einer verlängert haltbaren Trinkmilch, einer sog. ESL-Milch, beschrieben, wobei diese UHT-Anlage die vorstehend kurz umrissenen Merkmale einer handels üblichen UHT-Anlage zur Herstellung einer UHT-Milch aufweist. Es sei hier lediglich angemerkt, dass auf die regenerativen Wärmeaustauscher der Vorwärmzone und einen Vorheißhalter zunächst ein regenerativer Wärmeaustauscher der Erhitzerzone folgt, bevor die Milch in den nicht regenerativen Wärmeaustauschern der UHT-Erhitzerzone behandelt wird. Da die ESL Milch auf insgesamt niedrigerem Temperatur-Niveau-Verlauf als die UHT-Milch erzeugt wird, werden zur Steuerung der Heizleistung auf der Seite der Wärmeträgermedien und damit zur produktseitigen Temperaturanpassung zwischen der Vorerhitzer- und der Hocherhitzerzone sowie in der Abkühlzone Maßnahmen zur wahlweisen Verkleinerung der wirksamen Fläche des UHT-Erhitzers und zur Reduzierung der Kühlleistung in der Abkühlzone durch Bypassführung der Milch in diesen Bereichen vorgeschlagen.

Besonders temperatursensible Lebensmittelprodukte, wie beispielsweis Desserts oder dessertartige Produkte, insbesondere mit hoher Viskosität und ggf. mit feststoffhaltigen Bestandteilen wie ganzen Stücken, Pulpe oder Fasern, erfordern eine genaue und zügige Temperaturanpassung des aus der Vorerhitzerzone austretenden Lebensmittelprodukts an die Temperaturverhältnisse am Eintritt der Hocherhitzerzone, wie sie mit den vorstehend kurz umrissenen UHT-Anlagen für UHT-Milch oder der modifizierten UHT-Anlage für ESL-Milch gemäß DE 10 2005 007 557 A1 nicht realisierbar ist.

Darüber hinaus ist bei der Erfüllung der vorg. Zielsetzung gleichzeitig eine thermisch und mechanisch schonende Behandlung des Lebensmittelprodukts erforderlich. Aus der Forderung nach einer thermisch schonenden Behandlung folgt, dass alle Teilmengen eines der Wärmebehandlung der in Rede stehenden Art zu unterziehenden Lebensmittelprodukts zeitgleich und über die gleiche Zeitdauer den erforderlichen gleichen Temperatur-Niveau-Verlauf durchlaufen. Anders ausgedrückt bedeutet dies, dass alle Teilmengen bei gleicher Verweilzeit gleichen thermischen und strömungsmechanischen Bedingungen unterliegen.

Mechanisch schonende Behandlung bedeutet, dass die mechanische Belastung des Lebensmittelprodukts so niedrig wie möglich gehalten wird. Eine diesbezügliche Belastung tritt insbesondere immer dann auf, wenn das Lebensmittelprodukt Scherkräften unterworfen wird. Letztere treten notorisch bei Umlenkungen, unstetigen Querschnittsübergängen, Verzweigungen und Vereinigungen von Strömungsführungen auf, wie sie in einer UHT-Anlage der vorbeschriebenen Art regelmäßig vorliegen.

Dem Verzweigungsproblem der Strömung im Eintrittsbereich der Rohrträgerplatten eines Rohrbündel-Wärmeaustauschers (z.B. DE 94 03 913 U1), wie er in UHT-Anlagen bevorzugt Verwendung findet, widmet sich die DE 103 11 529 B3. Die unter der dort angegebenen Aufgabenstellung vorgeschlagenen zielführenden Maßnahmen betreffen die Verzweigung eines Lebensmittelprodukts auf eine Anzahl Teilmengen dieses Produkts aufnehmende Innenrohre des Rohrbündel-Wärmeaustauschers, wobei u.a. ein Verdrängerkörper vorgesehen ist, der axialsymmetrisch und konzentrisch zur Rohrträgerplatte angeordnet ist. Dabei sind die Innenrohre über die gesamte Kreisfläche der Rohrträgerplatte, in der Regel auf mehr als einem Teilkreis, ausschließlich eines eng begrenzten zentralen Bereichs, verteilt. Unter diesen Voraussetzungen liegen von vornherein sowohl im Eintrittsals auch im Austrittsbereich der jeweiligen Rohrträgerplatte, demnach bei der Verzweigung und der Vereinigung der Strömung, unterschiedlich lange Strömungswege zum Eintritt in die Innenrohre bzw. vom Austritt aus diesen vor. Schon allein dadurch kommen unterschiedliche Verweilzeiten für die die jeweiligen Innenrohre durchströmenden Teilmengen des Lebensmittelprodukts zustande. Der enge zentrale Bereich der Rohrträgerplatte bleibt von einem Innenrohr frei, da der Verdrängerkörper hier entweder mit der Rohrträgerplatte fest verbunden ist oder als frei beweglicher Verdrängerkörper zur Anlage kommt. Die Rohrspiegelteilung unterliegt insofern einer Einschränkung, da das Zentrum der Rohrträgerplatte von einem oder auch mehreren Innenrohren frei bleiben muss. Falls eine Anzahl Innenrohre vorgesehen ist, die auf einem einzigen Teilkreis Anordnung findet, wie dies beispielsweise Figur 9 zeigt, ergeben sich zumindest für den Eintritts- und Austrittsbereich der Innenrohre unterschiedliche Verweilzeiten des Lebensmittelprodukts und die außenseitige Anströmung der Innenrohre mit einem Wärmeträgermedium ist über den von diesem beaufschlagten Durchtrittsquerschnitt signifikant ungleichverteilt.

Aus der DE 10 2005 059 463 A1 ist bekannt, im Ein- und im Austrittsbereich einer Rohrträgerplatte eines Rohrbündel-Wärmeaustauschers einen Verdrängerkörper anzuordnen, wie er bereits aus der DE 103 11 529 B3 bekannt ist. Dieser Verdrängerkörper weist einen sich in Richtung seiner Symmetrieachse erstreckenden Schaftteil auf, der an seinem dem Verdrängerkörper abgewandten Ende mit einem/einer sich an den Austauscherflansch oder den Anschlussstutzen anschließenden Verbindungsbogen oder Verbindungsarmatur fest verbunden ist. Damit steht auch das Zentrum der Rohrträgerplatte für die Anordnung von Innenrohren zur Verfügung, wodurch allerdings die Strömungswege im Verlauf der Verzweigung und der Vereinigung der Strömung noch mehr differieren, als bei zentrumsfreier Belegung der Rohrträgerplatte und damit generell und systematisch noch größere Verweilzeitunterschiede angelegt sind.

Die GB 2 131 673 A offenbart ein Verfahren und eine Vorrichtung zur UHT-Behandlung von Flüssigkeiten, wie beispielsweise Milch, die ein Minimum an thermisch bedingter Schädigung der Milch bewirken sollen. Die UHT-Anlage weist unter anderem einen Wärmeaustauscher in einer Vorerhitzerzone auf, der einerseits über eine Produktleitung mit der zu erwärmenden Flüssigkeit und andererseits über eine erste Kreislaufleitung mit einem regenerativ generierten ersten Heizmedium beaufschlagt ist. Bezogen auf die Strömungsrichtung der zu erwärmenden Flüssigkeit schließt sich stromabwärts der Vorerhitzerzone eine Hocherhitzerzone an, die einen Wärmeaustauscher aufweist, der einerseits über die Produktleitung mit der zu erwärmenden Flüssigkeit und andererseits über eine zweite Kreislaufleitung mit einem zweiten Heizmedium beaufschlagt ist. Der Wärmeaustauscher der Vor- und der Hocherhitzerzone ist jeweils nur schematisch dargestellt; über die Art seines Aufbaus werden keine Angaben gemacht.

Aus dem Dokument US 4 997 662 A sind ein Verfahren und eine Vorrichtung zur Wärmebehandlung von Milch im Rahmen einer Pasteurisierung bekannt, die in bekannter Weise auf relativ niedrigem Temperaturniveau stattfindet. Die nach einer maschinellen Melkung in einem Vorratstank bevorratete Milch wird zum Zwecke ihrer Pasteurisierung einem Wärmeaustauscher zugeführt, der in drei in Reihe geschalteten Sektionen unterteilt ist, über dessen sonstigen Aufbau keine weiteren Angaben gemacht werden. Die als Vorerhitzer für die eintretende Milch fungierende erste Sektion ist im Gegenstrom von der auf die gewünschte Endtemperatur erwärmten und aus einem Heißhalter zurückgeführten Milch regenerativ beheizt. Die sich an die erste Sektion anschließende zweite Sektion des Wärmeaustauschers ist einerseits von der vorerhitzten Milch beaufschlagt und andererseits zur weiteren Erwärmung an ein erstes Heizmedium, im Bedarfsfall warmes oder kaltes Wasser, angeschlossen. Schließlich erfolgt die Erwärmung der Milch auf die gewünschte Endtemperatur der Pasteurisierung in der dritten Sektion, der die in der zweiten Sektion erhitzte Milch einerseits zugeführt wird und die andererseits von einem zweiten Heizmedium, das vorzugsweise elektrisch beheizt und im Kreislauf geführt wird, beaufschlagt ist.

Weiterhin offenbart Dokument EP 0 081 256 A1 ein Verfahren und eine Vorrichtung zur kontrollierten Wärmebehandlung eines Lebensmittelprodukts, beispielsweise zur Sterilisierung von Milch, in einem regenerativ arbeitenden Röhrenwärmeaustauscher, wobei der letzte Wärmeaustauscher der Vorerhitzerzone in Form einer Anordnung von drei konzentrischen Röhren aufgebaut ist. Der von der mittleren Röhre radial außenseits begrenzte mittlere Ringraum führt den Produktstrom, während wahlweise der von der äußeren Röhre außenseits begrenzte äußere Ringraum oder die innere Röhre das regenerativ generierte Heizmedium führen kann.

Es ist Aufgabe der vorliegenden Erfindung, bei einer UHT-Anlage der gattungsgemäßen Art eine genaue und zügige Temperaturanpassung des aus der Vorerhitzerzone austretenden Lebensmittelprodukts an die Temperaturverhältnisse am Eintritt der Hocherhitzerzone zu erreichen, gleichzeitig bei gleicher Verweilzeit für alle Teilmengen des Lebensmittelprodukts eine thermisch besonders schonende Behandlung des Lebensmittelprodukts sicherzustellen und die mechanische Belastung des Lebensmittelprodukts so niedrig wie möglich zu halten.

### ZUSAMMENFASSUNG DER ERFINDUNG

Diese Aufgabe wird durch eine UHT-Anlage mit den Merkmalen des Anspruchs 1 gelöst. Vorteilhafte Ausführungsformen der UHT-Anlage sind Gegenstand der Unteransprüche. Ein Verfahren zur Wärmebehandlung von temperatursensiblen Lebensmittelprodukten in einer diesbezüglichen UHT-Anlage ist Gegenstand des Nebenanspruchs 15. Vorteilhafte Ausgestaltungen des Verfahrens sind Gegenstand der Unteransprüche.

Der erste erfinderische Grundgedanke besteht darin, dem regenerativ generierten ersten Heizmedium zusätzlich extern herangeführte Heizenergie zuzuführen, und zwar genau an der Stelle der UHT-Anlage, an der die Temperaturanpassung des temperatursensiblen Lebensmittelprodukts, das insbesondere als ein Dessert oder ein dessertartiges Produkt vorliegt, erforderlich ist. Dies gelingt erfindungsgemäß dadurch, dass ein erster Leitungsabschnitt, der einen Abschnitt der ersten Kreislaufleitung bildet und der dem ersten Wärmeaustauscher der Vorerhitzerzone das erste Heizmedium zuführt, über einen mit einem dritten Heizmedium beheizten Trimmerhitzer geführt ist.

Um diese Temperaturanpassung zeitnah und zügig vorzunehmen, ist entsprechend einem zweiten erfinderische Grundgedanken vorgesehen, dass von einem zweiten Leitungsabschnitt, der einen weiteren Abschnitt der sich fortsetzenden ersten Kreislaufleitung bildet und der aus dem ersten Wärmeaustauscher der Vorerhitzerzone das erste Heizmedium abführt, an einer Verzweigungsstelle eine Rückführleitung abzweigt. Letztere mündet, bezogen auf die Strömungsrichtung des ersten Heizmediums in dem ersten Leitungsabschnitt, oberstromig des Trimmerhitzers an einer Vereinigungsstelle in den ersten Leitungsabschnitt ein. In der Rückführleitung ist eine von der Verzweigungs- zur Vereinigungsstelle fördernde zweite Fördereinrichtung angeordnet, mit der die Förderleistung im Bereich des zusätzlich beheizten ersten Heizmediums signifikant erhöht werden kann. Damit wird das zusätzlich beheizte erste Heizmedium zügig in den ersten Wärmeaustauscher der Vorerhitzerzone verbracht und durch die Erhöhung der Strömungsgeschwindigkeit werden dort gleichzeitig die Wärmeübergangsbedingungen auf der Seite des ersten Heizmediums signifikant verbessert. Die diesbezügliche Verbesserung geht einher mit einer gleichfalls erfindungsgemäß vorgeschlagenen adäquaten Verbesserung der Wärmeübergangsbedingungen auf der Seite des Lebensmittelprodukts. Dies wird durch eine signifikante Erhöhung der Strömungsgeschwindigkeit in den Innenrohren erreicht.

Ein dritter erfinderischer Grundgedanke stellt sicher, dass alle Teilmengen des Lebensmittelprodukts die gleiche Verweilzeit beim Durchlaufen der Temperatur-Niveau-Verläufe erfahren. Dies gelingt dadurch, dass von den produktführenden Wärmeaustauschern der Vor- und Hocherhitzerzone, die jeweils als Rohrbündel-Wärmeaustauscher ausgebildet sind, wenigstens der erste Wärmeaustauscher der Vorerhitzerzone derart ausgebildet ist, dass bei dem wenigstens einen Rohrbündel sämtliche Innenrohre kreisringförmig, auf einem einzigen Kreis und in einem als Ringraum ausgebildeten Außenkanal angeordnet sind, sich in dessen Längsrichtung erstrecken und endseitig jeweils in einer Rohrträgerplatte abstützen.

Im dritten erfinderischen Grundgedanken und seiner nachfolgend noch beschriebenen bevorzugten Ausgestaltungen kann ein eigenständiger Erfindungsaspekt gesehen werden. Die vorbeschriebene Anordnung der Innenrohre im jeweiligen Rohrbündel schafft zunächst einmal die besten Voraussetzungen dafür, dass für alle sich zwischen Produkt-Eintritt und -Austritt in die Innenrohre verzweigenden und sich vereinigenden Teilmengen des Lebensmittelprodukts nahezu kongruente Strömungswege gegeben sind. Durch kreisringförmige Anordnung der Innenrohre auf einem einzigen Kreis in einem Ringraum, dessen Ringquerschnitt vorzugsweise so bemessen ist, dass eine über die gesamte Außenseite der Innenrohre hinreichende Umströmung mit dem Heizmedium sichergestellt ist, ergeben sich darüber hinaus optimale und weitestgehend einheitliche Wärmeübergangsbedingungen auf diesen Außenseiten. Diese Anordnung erlaubt es nun erstmalig, jedes einzelne Innenrohr auf seiner vom ersten oder zweiten Heizmedium beaufschlagten äußeren Mantelfläche planmäßig mit der gleichen Strömungsgeschwindigkeit beströmen zu lassen, so dass dadurch jedem Innenrohr dort die vorbeschriebenen gleichen Wärmeübergangsbedingungen zuteil werden. Dadurch werden in einer Querschnittsebene des Rohrbündels für alle in den Innenrohren strömenden Teilmengen gleicher Wärmeeintrag und damit gleiche Temperaturen sichergestellt. Die Kombination aus den Eigenschaften "kongruente Strömungswege" und "Vereinheitlichung des Wärmeeintrags auf allen diesen Strömungswegen" ergibt gleiche Verweilzeiten für alle Teilmengen des Lebensmittelprodukts und führt dadurch im Endergebnis zu einer gleichen thermischen Behandlung dieser Teilmengen durch den verfahrenstechnischen Wirkmechanismus aus Temperatur mal Zeit. Mit einem Rohrbündel der bekannten Art, bei dem die Innenrohre über den gesamten kreisförmigen Rohrbündelquerschnitt verteilt angeordnet sind, sind diesbezügliche Wärmeübergangsbedingungen nicht zu erreichen.

Das wenigstens eine Rohrbündel weist in einer bevorzugten Ausführungsform jeweils den von einem Außenmantel umgebenen ringraumförmigen Außenkanal für das regenerative erste oder das zweite Heizmedium auf, wobei eine Anzahl Innenrohre vorgesehen ist, die sich achsparallel zum Außenmantel durch den Außenkanal erstrecken und gemeinsam einen Innenkanal bildend. Für alle Innenrohre ist ein gemeinsamer, einerseits in einem ersten Austauscherflansch ausgebildeter Produkt-Eintritt oder Produkt-Austritt und ein gemeinsamer, andererseits in einem zweiten Austauscherflansch ausgebildeter Produkt-Austritt bzw. Produkt-Eintritt für das Lebensmittelprodukt vorgesehen.

Ein derart aufgebauter Rohrbündel-Wärmeaustauscher ermöglicht es in vorteilhafter Weise, ihn in seinen endseitigen Bereichen, zumindest jeweils im Anschluss an den Außenkanal, spiegelbildlich formidentisch und abmessungsgleich auszubilden. Dies schließt sämtliche, nachstehend noch im Einzelnen dargestellte Merkmale in diesen Bereichen uneingeschränkt ein. Der vorstehend vorgeschlagene Rohrbündel-Wärmeaustauscher ist damit deutlich einfacher als jener gemäß DE 94 03 913 U1 aufgebaut, der zur Kompensation thermischer Spannungen intern ein implementiertes Fest- und Loslager aufweist. Der erfindungsgemäße Rohrbündel-Wärmeaustauscher realisiert das Fest- und Loslager vorzugsweise extern und denkbar einfach, indem der eine Außenmantelflansch in seiner Umgebung fest und der andere Außenmantelflansch dort frei beweglich gelagert ist.

Kongruente Strömungswege für das Lebensmittelprodukt im Bereich seiner sich verzweigenden und vereinigenden Teilmengen und im Strömungsbereich zwischen den Verzweigungs- und Vereinigungsstellen zur Sicherstellung gleicher Verweilzeiten in den Bereichen der Wärmebehandlung des Lebensmittelprodukts werden durch den vorstehend angegebenen dritten erfinderischen Grundgedanken grundsätzlich sichergestellt. Bestmögliche Voraussetzungen für die konkrete Realisierung kongruenter Strömungswege werden darüber hinaus dadurch geschaffen, dass die Innenrohre des Rohrbündels im größtmöglichen Umfangsbereich der Rohrträgerplatte angeordnet sind. Diese Ausgestaltung wird vorzugsweise so ausgeführt, dass die Spaltbreite des Ringraumes so klein wie für eine hinreichende Umströmung mit Heizmedium nötig und der Kreisdurchmesser, auf dem die Innenrohre angeordnet sind, so groß wie möglich bemessen sind.

Ein weiterer Vorschlag sieht vor, dass die Innenrohre des Rohrbündels über den Umfang des Kreises gleichverteilt angeordnet sind. Dadurch und in Verbindung mit den vorstehend beschriebenen Abmessungsverhältnissen werden die Strömungswege von der unverzweigten Gesamtströmung zur jeweils verzweigten Teilströmung in den Innenrohren absolut kongruent. Dies ist jedenfalls immer dann der Fall, wenn die Strömungsverzweigung, wie dies ebenfalls vorgesehen ist, axialsymmetrisch ausgestaltet ist und wenn man von minimalen Unterschieden absieht, die durch die radiale Erstreckung des Rohrinnendurchmessers gegeben sind. Diese Effekte werden aber durch den turbulenten Queraustausch der Strömung im jeweiligen Innenrohr kompensiert.

Die Realisierung des ringraumförmigen Außenkanals gelingt sehr einfach dadurch, dass der als Ringraum ausgebildete Außenkanal innenseits von einem Innenmantel begrenzt ist, der nach einem ersten Vorschlag in Form eines inneren Rohres oder nach einem zweiten Vorschlag in Form einer Innenstange begrenzt ist, wobei inneres Rohr und Innenstange sich jeweils endseitig in der Rohrträgerplatte abstützen. Dadurch befinden sich die auf einem einzigen Kreis angeordneten Innenrohre in einem äquidistanten, relativ eng zu bemessenden Ringraum, in dem es keine Toträume und stagnierenden Bereiche der Strömung des ersten oder zweiten Heizmediums gibt, und es kann für jedes Innenrohr dessen Anströmgeschwindigkeit durch das erste oder zweite Heizmedium gleichermaßen über das bisher im Stand der Technik übliche Maß heraufgesetzt werden.

Es hat sich als vorteilhaft herausgestellt, die Anströmgeschwindigkeit im vorg. Ringraum wenigstens im ersten Wärmeaustauscher der Vorwärmzone, dem das zusätzlich beheizte erste Heizmedium zugeführt wird, aus einem Volumenstrom zu generieren, der annähernd gleich einem Volumenstrom auf der Seite des zweiten Heizmediums im sich der Vorwärmzone anschließenden Wärmeaustauscher der Hocherhitzerzone ist.

Um die Strömung des Lebensmittelprodukts auf ihrem Strömungsweg einerseits von einer Gesamtströmung bis zur eigentlichen Verzweigung in die Innenrohre und andererseits von den Innenrohren zur Vereinigung wiederum in den Gesamtstrom möglichst verlust- und stoßfrei zu führen, ist weiterhin vorgesehen, dass der Austauscherflansch auf seiner der zugeordneten Rohrträgerplatte abgewandten Seite eine Anschlussöffnung aufweist, dass sich letztere im Austauscherflansch vorzugsweise axialsymmetrisch über einen vorzugsweise konisch oder konusförmig ausgebildeten, insbesondere von Unstetigkeitsstellen freien Übergang bis zu einem endseitig vorgesehenen erweiterten Durchtrittsquerschnitt öffnet. Darüber hinaus ist vorzugsweise koaxial zur Anschlussöffnung und vorzugsweise konzentrisch zur Rohrträgerplatte ein mit dieser fest verbundener, axialsymmetrischer Verdrängerkörper vorgesehen, der mit einer durch die Anschlussöffnung, den konischen oder konusförmigen Übergang und den erweiterten Durchtrittsquerschnitt gebildeten Innenkontur einen ringförmigen Kanal ausbildet. Über die Wirkungsweise eines an sich bekannten Verdrängerkörpers im An- und Abströmbereich einer Rohrträgerplatte wird in den Druckschriften DE 103 11 529 B3 und DE 10 2005 059 463 A1 berichtet. Dort ist jeweils die Einflussnahme des Verdrängerkörpers auf die gesamte mit Innenrohren belegte Kreisfläche einer Rohrträgerplatte Gegenstand der Betrachtung, während die vorliegende Erfindung kreisringförmig, auf einem einzigen Kreis und nur am Umfang der Rohrträgerplatte angeordnete Innenrohre zum Gegenstand hat.

Dabei wird die der vorliegenden Erfindung zugrunde liegende Aufgabe gemäß einem weiteren Vorschlag am besten gelöst, wenn sich der ringförmige Kanal von der Anschlussöffnung bis zur Rohrträgerplatte hin in seinem jeweiligen Ringspalt-Durchtrittsquerschnitt stetig erweitert.

Günstige Strömungsverhältnisse im Ein- und Austrittsbereich der Innenrohre und insbesondere ein Eintritt des Lebensmittelprodukts, der sich durch eine verminderte Ablagerungsneigung faserhaltiger Bestandteile auszeichnet, werden gemäß einem weiteren Vorschlag dadurch sichergestellt, dass der Verdrängerkörper vorzugsweise pilzförmig, auf der An- oder Abströmseite insbesondere sich stetig verjüngend, ausgebildet ist. Dabei besteht er bevorzugt aus einem vorderen Teil und einem in einem Verdrängerfuß endenden hinteren Teil, die an ihrem Verbindungsquerschnitt einen gemeinsamen größten Außendurchmesser in Form einer definierten Strömungsabrissstelle bilden. Der Verdrängerfuß endet dabei vorzugsweise unmittelbar an der Rohrträgerplatte.

Eine weitestgehende Verminderung der mechanischen Belastung des Lebensmittelprodukts bei dessen Verzeigung in Teilmengen (Eintrittsverluste bei Verzweigung) und der sich danach vollziehenden Vereinigung in einen Gesamtstrom (Austrittsverluste bei Vereinigung) wird in nicht voraussehbarer Weise erreicht, wenn, wie dies ein weiterer Vorschlag vorsieht, die Innenrohre endseitig jeweils in und bündig mit einem Boden einer Einlaufrinne ausmünden, die von der Seite des Austauscherflansches in Form einer ringförmigen Vertiefung in die Rohrträgerplatte eingreift. Dabei ist der Boden um einen gleichzeitig auch die Tiefe der Einlaufrinne bestimmenden Rücksprung von der Stirnfläche der Rohrträgerplatte beabstandet.

Ein- und Austrittsverluste im vorstehenden Sinne werden weiter dadurch reduziert, dass sich die Einlaufrinne vorzugsweise symmetrisch zum Außendurchmesser des jeweiligen Innenrohres hin stetig, vorzugsweise mit konkaver Oberfläche, verjüngt.

Die Ein- und Austrittsverluste werden minimiert, wenn das jeweilige Innenrohr in einer Anschlussbohrung im Boden der Einlaufrinne Aufnahme findet, die in Form eines in die Einlaufrinne eingreifenden, sich stetig zum Innenrohr hin verjüngenden Einlauftrichters angesenkt ist. Die Formgestalt des Einlauftrichters ist dabei vorzugsweise tulpenförmig, konusförmig, konisch oder kegelförmig.

Der Übergang zwischen dem ringförmigen Kanal im Austauscherflansch und der Einlaufrinne in der Rohrträgerplatte gestaltet sich strömungstechnisch besonders günstig, wenn der erweiterte Durchtrittsquerschnitt mit seinem Innendurchmesser bündig und stetig in eine außenseitige Flanke und der Verdrängerfuß mit seinem endseitigen ausgebildeten Außendurchmesser bündig und stetig in eine innenseitige Flanke der Einlaufrinne übergehen.

Die Erfindung schlägt weiterhin ein Verfahren zur Wärmebehandlung von temperatursensiblen Lebensmittelprodukten, insbesondere Desserts oder dessertartigen Produkten, in einer UHT-Anlage vor. Letztere umfasst u.a. in an sich bekannter Weise eine Vorerhitzung und eine sich anschließende Hocherhitzung des zu erwärmenden Lebensmittelprodukts, wobei ein regenerativ generiertes, in einem ersten Kreislauf durch die UHT-Anlage geführtes erstes Heizmedium für die Vorerhitzung und ein in einem zweiten Kreislauf geführtes zweites Heizmedium für die Hocherhitzung vorgesehen sind.

Ein erster erfindungswesentlicher verfahrenstechnischer Lösungsgedanke, der die aufgabengemäße Temperaturanpassung des Lebensmittelprodukts generell erst ermöglicht, besteht darin, dass eine Eintrittstemperatur des Lebensmittelprodukts vor Eintritt in die Hocherhitzung durch zusätzliche Beheizung des ersten Heizmediums mittels eines dritten, extern herangeführten Heizmediums an die Erfordernisse der Hocherhitzung angepasst wird, und dass die zusätzliche Beheizung des ersten Heizmediums vor dessen Eintritt in die Vorerhitzung erfolgt.

Die Bereitstellung der zusätzlichen Heizenergie allein ist noch nicht zielführend im Sinne der Aufgabenstellung. Erst wenn diese Heizenergie zügig und unverzüglich bereitgestellt wird, ergibt sich eine befriedigende Lösung. Daher sieht ein zweiter erfindungswesentlicher verfahrenstechnischer Lösungsgedanke vor, dass das erste Heizmedium im Bereich seiner zusätzlichen Beheizung und seiner anschließenden Verwendung in der Vorerhitzung mit einem Volumenstrom gefördert wird, der gegenüber dem im gesamten ersten Kreislauf der UHT-Anlage vorliegenden ersten Volumenstrom des ersten Heizmediums erhöht ist.

Eine hinreichende Lösung der erfindungsgemäßen Aufgabenstellung wird schließlich durch einen dritten erfindungswesentlichen verfahrenstechnischen Lösungsgedanke erreicht, der vorsieht, dass alle sich in der Vorerhitzung und anschließenden Hocherhitzung jeweils verzweigenden und vereinigenden Teilmengen des Lebensmittelprodukts wenigstens in der Vorerhitzung die gleiche Verweilzeit auf kongruenten Stömungswegen erfahren.

Eine vorteilhafte Ausgestaltung des Verfahrens sieht vor, dass die zusätzliche Beheizung des ersten Heizmediums zeitlich begrenzt oder begrenzbar steuerbar ist. Dadurch ist es möglich, die erfindungsgemäß vorgesehenen Maßnahmen temporär zu begrenzen, beispielsweise auf Phasen bekanntermaßen instationärer Prozessbedingungen in und im Umfeld der UHT-Anlage, in denen die erfindungsgemäße Temperaturanpassung erforderlich ist.

Eine andere vorteilhafte Ausgestaltung des Verfahrens schlägt vor, im Sinne einer Beschränkung auf das apparativ unbedingt Notwendige, dass die Verwendung des zusätzlich beheizten ersten Heizmediums auf einen unmittelbar oberstromig der Hocherhitzung angeordneten Teilbereich der Vorerhitzung beschränkt ist.

Um die Wärmeübergangsbedingungen auf der Seite des zusätzlich beheizten ersten Heizmediums optimal an die Gesamtgegebenheiten in der UHT-Anlage anzupassen, schlägt eine weitere Ausgestaltung des Verfahrens vor, dass der Volumenstrom des zusätzlich beheizten ersten Heizmediums annähernd gleich einem zweiten Volumenstrom des zweiten Heizmediums der Hocherhitzung ist.

Die durch die erfindungsgemäße kreisringförmige Anordnung der Innenrohre auf einem einzigen Kreis und in einem als Ringraum ausgebildeten Außenkanal geschaffenen optimalen Wärmeübergangsbedingungen auf der Seite des ersten Heizmediums führen zu einem insgesamt verbesserten Wärmedurchgang zu dem in den Innenrohren strömenden Lebensmittelprodukt, wenn, wie dies ein weiterer Vorschlag vorsieht, die Wärmeübergangsbedingungen in dem von der zusätzlichen Beheizung des ersten Heizmediums umfassten Bereich der Vorerhitzung auf der Seite des Lebensmittelprodukts den Wärmeübergangsbedingungen auf der Seite des ersten Heizmediums entsprechend angepasst sind, und zwar durch Erhöhung der Strömungsgeschwindigkeit im Innenrohr.

Es hat sich als besonders ziehführend im Hinblick auf eine thermisch besonders schonende Behandlung und eine so niedrig wie mögliche mechanische Belastung des Lebensmittelprodukts erwiesen, wenn die Strömungsgeschwindigkeit des Lebensmittelprodukts in den unverzweigten und den verzweigten Strömungsbereichen stetig und stoßfrei geändert wird. Dies geschieht dadurch, dass im Zuge der Vorbereitung der Verzweigung die Strömung zunächst von einem Ausgangswert der unverzweigten Strömung, der ersten Strömungsgeschwindigkeit, auf einen Minimalwert der unverzweigten Strömung, der zweiten Strömungsgeschwindigkeit, verzögert und die Strömung anschließend im Verlauf ihrer Verzweigung auf einen Maximalwert, die dritte Strömungsgeschwindigkeit, beschleunigt wird, wobei die dritte Strömungsgeschwindigkeit größer als die erste Strömungsgeschwindigkeit ist, und sich die Vereinigung der Teilmengen des Lebensmittelprodukts sinngemäß umgekehrt vollzieht.

Die vorstehend beschriebene UHT-Anlage und das mit dieser durchführbare Verfahren finden besonders vorteilhaft Anwendung auf ein temperatursensibles Lebensmittelprodukt, das die Beschaffenheit eines Desserts oder eines dessertartigen Produkts besitzt.

### KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen realisiert ist, werden in der Zeichnung ein bevorzugtes Ausführungsbeispiel der UHT-Anlage sowie zwei Ausführungsformen eines in der erfindungsgemäßen UHT-Anlage vorteilhaft Verwendung findenden Rohrbündel-Wärmeaustauschers dargestellt und nachfolgend nach Aufbau und Funktion beschrieben. Es zeigen
- **Figur 1**: in schematischer Darstellung einen relevanten Teilbereich der erfindungsgemäßen UHT-Anlage, der auf wesentliche Merkmale reduziert ist;
- **Figur 2**: im Meridianschnitt eine erste Ausführungsform eines in der UHT-Anlage gemäß **Figur 1** bevorzugt verwendeten Rohrbündel-Wärmeaustauschers;
- **Figur 2a**: in Ansicht den Rohrbündel-Wärmeaustauscher gemäß **Figur 2**, wenn die Blickrichtung auf die Darstellung nach Figur 2 von rechts erfolgt und dabei der rechtsseitig angeordnete zweite Austauscherflansch von der zugordneten Rohrträgerplatte entfernt ist;
- **Figur 2b**: in vergrößerter Darstellung eine im Meridianschnitt gemäß **Figur 2a** mit "**X**" gekennzeichnete Einzelheit im Bereich der in der Rohrträgerplatte ausmündenden Enden der Innenrohre;
- **Figur 2c**: eine abermals vergrößerte Darstellung der Einzelheit gemäß **Figur 2b****;**
- **Figur 3**: im Meridianschnitt eine zweite Ausführungsform eines in der UHT-Anlage gemäß **Figur 1** gleichfalls bevorzugt verwendeten Rohrbündel-Wärmeaustauschers und
- **Figur 3a**: in Ansicht den Rohrbündel-Wärmeaustauscher gemäß **Figur 3** unter den Bedingungen für die Darstellung der **Figur 2a**.

### DETAILLIERTE BESCHREIBUNG

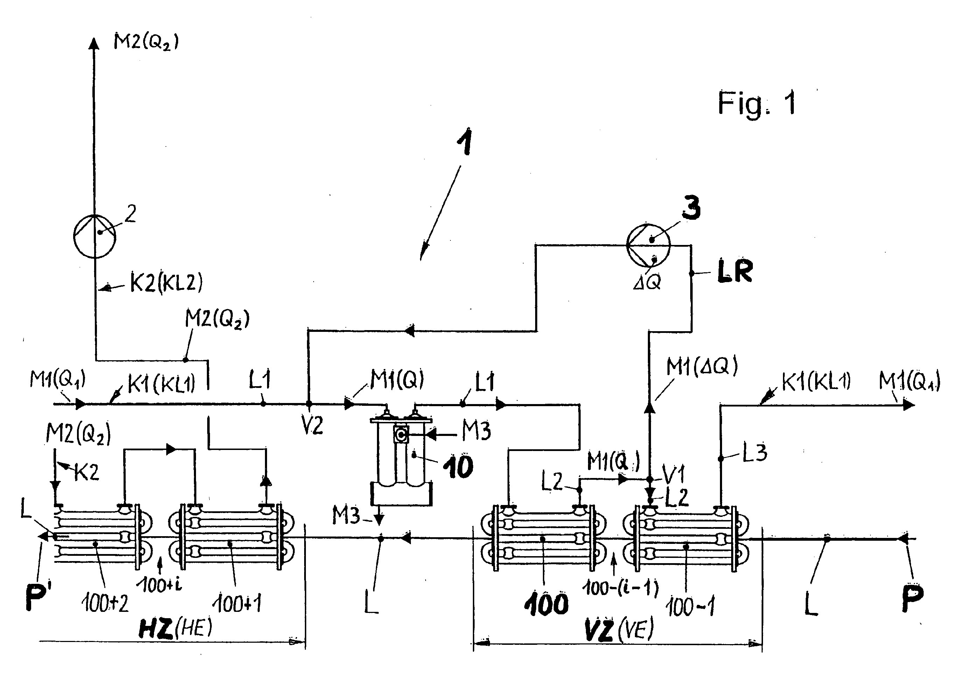

In den in **Figur 1** dargestellten Teilbereich einer UHT-Anlage 1 tritt in eine Vorerhitzerzone VZ über eine Produktleitung L ein einer Wärmebehandlung zu unterziehendes, temperatursensibles Produkt P ein, wie beispielsweise ein Dessert oder ein dessertartiges Produkt. Die Vorerhitzerzone VZ, in der das Lebensmittelprodukt P eine Vorerhitzung VE erfährt, wird aus einem ersten Wärmeaustauscher der Vorerhitzerzone 100 und einem, bezogen auf die Strömungsrichtung des Lebensmittelprodukts P, oberstromig von diesem angeordneten zweiten Wärmeaustauscher der Vorerhitzerzone 100-1 gebildet. Beide werden über eine erste Kreislaufleitung K1 mit einem regenerativ generierten ersten Heizmedium M1, vorzugsweise Wasser, beaufschlagt. Letzteres wird in der ersten Kreislaufleitung K1 in einem ersten Kreislauf KL1 mit einem ersten Volumenstrom Q₁ gefördert und gelangt über einen ersten Leitungsabschnitt L1, der einen Abschnitt der ersten Kreislaufleitung K1 bildet, zu dem ersten Wärmeaustauscher der Vorerhitzerzone 100, durchströmt diesen vorzugsweise im Gegenstrom zum Lebensmittelprodukt P, gelangt über einen zweiten Leitungsabschnitt L2, der einen weiteren Abschnitt der sich fortsetzenden ersten Kreislaufleitung K1 bildet, zu dem zweiten Wärmeaustauscher der Vorerhitzerzone 100-1, der ebenfalls vorzugsweise im Gegenstrom durchströmt wird, und verlässt letzteren über einen dritten Leitungsabschnitt L3 der ersten Kreislaufleitung K1. Die Vorerhitzerzone VZ kann im allgemeinsten Falle aus 100-(i-1) Wärmeaustauschern bestehen, wobei i die Werte von 1 bis n annimmt und, bezogen auf die Strömungsrichtung des Lebensmittelprodukts P, oberstromig zunehmend gezählt wird.

Die aus der Vorerhitzerzone VZ austretende Produktleitung L mündet in eine Hocherhitzerzone HZ ein. Letztere, in der das Lebensmittelprodukt P eine Hocherhitzung HE erfährt und zu einem wärmebehandelten Lebensmittelprodukt P' wird, wird aus einem ersten Wärmeaustauscher der Hocherhitzerzone 100+1 und einem, bezogen auf die Strömungsrichtung des Lebensmittelprodukts P, unterstromig von diesem angeordneten zweiten Wärmeaustauscher der Hocherhitzerzone 100+2 gebildet. Beide werden mittels einer ersten Fördereinrichtung 2 über eine zweite Kreislaufleitung K2, vorzugsweise im Gegenstrom zum Lebensmittelprodukt P, mit einem zweiten Heizmedium M2, vorzugsweise Wasser, beaufschlagt, das in einem zweiten Kreislauf KL2 mit einem zweiten Volumenstrom Q₂ zirkuliert. Die Hocherhitzerzone HZ kann im allgemeinsten Falle aus 100+i Wärmeaustauschern bestehen, wobei i die Werte von 1 bis n annimmt und, bezogen auf die Strömungsrichtung des Lebensmittelprodukts P, unterstromig zunehmend gezählt wird.

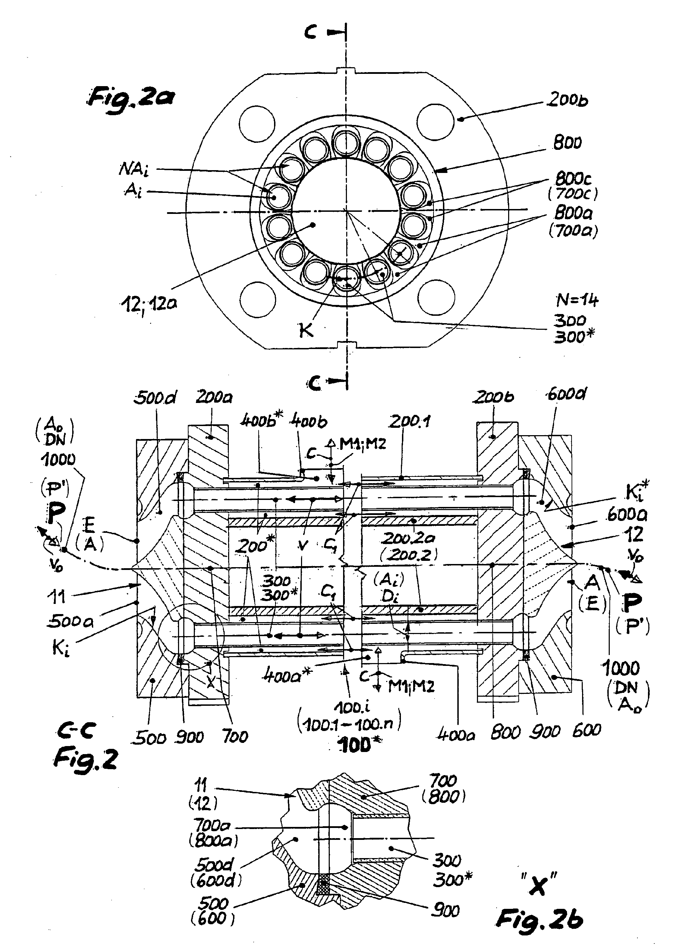

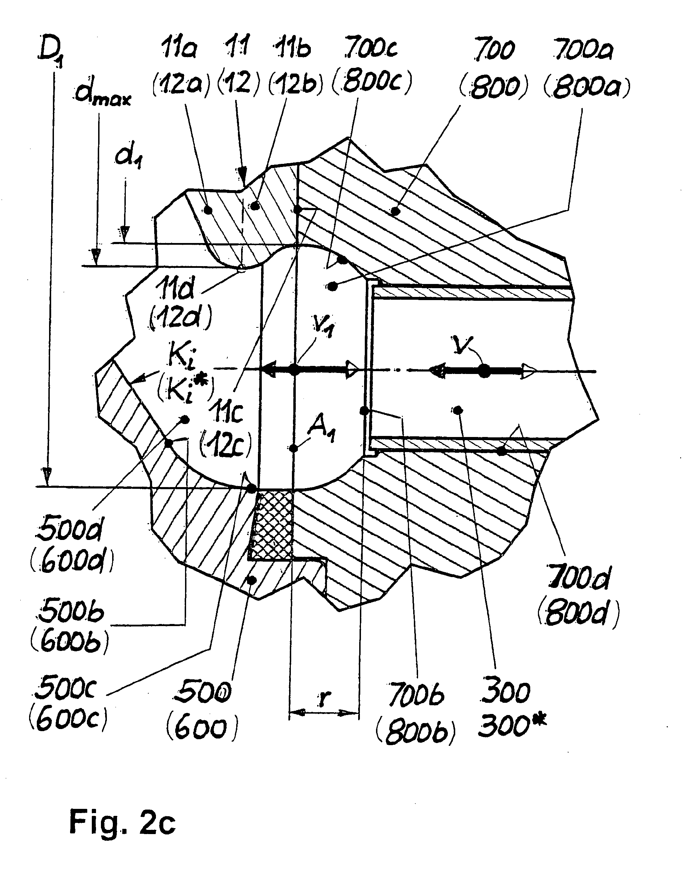

Die produktführenden Wärmeaustauscher der Vor- und Hocherhitzerzone 100-(i-1) und 100+i sind jeweils bevorzugt als Rohrbündel-Wärmeaustauscher 100* (s. **Figuren 2** bis **3a**) mit jeweils wenigstens einem Rohrbündel 100.i ausgebildet, wobei das jeweilige Rohrbündel 100.i aus einer Gruppe von parallel geschalteten, innenseits jeweils produktdurchströmten Innenrohren 300 besteht,

Der erste Leitungsabschnitt L1 ist erfindungsgemäß über einen mit einem extern zugeführten dritten Heizmedium M3 beheizten Trimmerhitzer 10 geführt. Von dem zweiten Leitungsabschnitt L2 zweigt erfindungsgemäß an einer Verzweigungsstelle V1 eine Rückführleitung LR ab, die, bezogen auf die Strömungsrichtung des ersten Heizmediums M1, oberstromig des Trimmerhitzers 10 an einer Vereinigungsstelle V2 in den ersten Leitungsabschnitt L1 einmündet. In der Rückführleitung LR ist eine von der Verzweigungsstelle V1 zur Vereinigungsstelle V2 mit einem Zusatzvolumenstrom ΔQ fördernde zweite Fördereinrichtung 3 angeordnet.

Während in der ersten Kreislaufleitung K1 mittels einer nicht dargestellten Fördereinrichtung das erste Heizmedium M1 mit dem ersten Volumenstrom Q₁ zirkuliert, ergibt sich zwischen der Verzweigungsstelle V2 und der Vereinigungsstelle V1 und damit im Trimmerhitzer 10 und dem ersten Wärmeaustauscher der Vorerhitzerzone 100, jeweils auf der Seite des ersten Heizmediums M1, ein aus dem ersten Volumenstrom Q₁ und dem Zusatzvolumenstrom ΔQ zusammengeführter und damit gegenüber dem ersten Volumenstrom Q₁ erhöhter Volumenstrom Q. Mit letzterem gelingt im Zusammenwirken mit der zusätzlichen Beheizung des ersten Heizmediums M1 im Trimmerhitzer 10 eine genaue und zügige Temperaturanpassung des aus der Vorerhitzerzone VZ austretenden Lebensmittelprodukts P an die Temperaturverhältnisse am Eintritt der Hocherhitzerzone HZ im Sinne der erfindungsgemäßen Aufgabenstellung. Als weitere flankierende Maßnahmen im Sinne der Aufgabenstellung werden noch eine Verbesserung der Wärmeübergangsbedingungen wenigstens im ersten Wärmeaustauscher der Vorerhitzerzone 100, und zwar sowohl auf der Seite des ersten Heizmediums M1 als auch auf der Seite des Lebensmittelprodukts P, vorgeschlagen. Dies geschieht auf beiden Seiten des Wärmedurchgangs durch eine planmäßige Erhöhung der Strömungsgeschwindigkeit in allen zu durchströmenden Bereichen.

Von den produktführenden Wärmeaustauschern der Vor- und Hocherhitzerzone 100, 100-1, ... und 100+1, 100+2, ... weist wenigstens der erste Wärmeaustauscher der Vorerhitzerzone 100 zwischen seinem von dem gesamten Lebensmittelprodukt P durchsetzten Produkt-Eintritt E und Produkt-Austritt A (siehe **Figur 2**) für alle sich zwischen letzteren verzweigenden und vereinigenden Teilmengen des Lebensmittelprodukts P kongruente Strömungswege auf. Dies wird gegenständlich dadurch erreicht, dass bei dem wenigstens einen Rohrbündel 100.i sämtliche Innenrohre 300 kreisringförmig, auf einem einzigen Kreis K und in einem als Ringraum ausgebildeten Außenkanal 200* angeordnet sind und sich in dessen Längsrichtung erstrecken und endseitig jeweils in einer Rohrträgerplatte 700, 800 abstützen (s. z.B. **Figuren 2, 2a**).

Verfahrenstechnisch wird durch das letztgenannte Vorrichtungsmerkmal sichergestellt, dass alle sich in der Vorerhitzung VE und anschließenden Hocherhitzung HE jeweils verzweigenden und vereinigenden Teilmengen des Lebensmittelprodukts P wenigstens in der Vorerhitzung VE die gleiche Verweilzeit erfahren. Verfahrenstechnisch ist weiter vorgesehen, dass die zusätzliche Beheizung des ersten Heizmediums M1 zeitlich begrenzt oder begrenzbar steuerbar ist. Darüber hinaus ist die Verwendung des zusätzlich beheizten ersten Heizmediums M1 auf einen unmittelbar oberstromig der Hocherhitzerzone HZ angeordneten, vorzugsweise im Umfang eines Wärmeaustauschers abgrenzbaren Teilbereich der Vorerhitzerzone VZ beschränkt. Des Weiteren ist es von Vorteil, wenn der Volumenstrom Q annähernd gleich dem zweiten Volumenstrom Q₂ des zweiten Heizmediums M2 der Hocherhitzerzone HZ ist.

Der in der Regel aus einer Vielzahl von Rohrbündeln 100.1 bis 100.n (100.1, 100.2, ..., 100.i, ..., 100.n; i = 1 bis n) zusammengesetzter Rohrbündel-Wärmeaustauscher 100*, wobei mit 100.i ein beliebiges Rohrbündel bezeichnet wird (**Figur 2****;** siehe grundsätzlichen Aufbau auch in der DE 94 03 913 U1), besteht in seinem mittleren Teil aus einem den Außenkanal 200* begrenzenden Außenmantel 200.1 mit einem, bezogen auf die Darstellungslage, linksseitig angeordneten ersten Außenmantelflansch 200a, der in der Regel einstückig an der ersten Rohrträgerplatte 700 ausgebildet ist, und einem rechtsseitig in gleicher Weise ausgebildeten und angeordneten zweiten Außenmantelflansch 200b. Der Rohrbündel-Wärmeaustauscher 100* lässt Längenänderungen, bedingt durch Temperaturänderungen, zu, wenn der Außenmantelflansch 200a oder 200b in seiner Umgebung fest und der jeweils andere dort frei beweglich gelagert ist.

Im Bereich des rechtsseitigen Endes des Außenmantels 200.1 ist an letzterem ein in einen ersten Anschlussstutzen 400a ausmündender erster Querkanal 400a* und im Bereich des linksseitigen Endes des Außenmantels 200.1 ist an letzterem ein in einen zweiten Anschlussstutzen 400b ausmündender zweiter Querkanal 400b* vorgesehen.

Eine Anzahl N von sich achsparallel zum Außenmantel 200.1 durch den Außenkanal 200* erstreckenden, gemeinsam einen Innenkanal 300* bildenden Innenrohre 300, wobei im Ausführungsbeispiel N = 14 Innenrohre 300 vorgesehen sind, ist endseitig jeweils in der ersten Rohrträgerplatte 700 und der zweiten Rohrträgerplatte 800 (beide auch als Rohrspiegelplatte bezeichnet) abgestützt und an ihrem Rohraußendurchmesser und an ihrer jeweiligen Stirnfläch dort jeweils verschweißt.

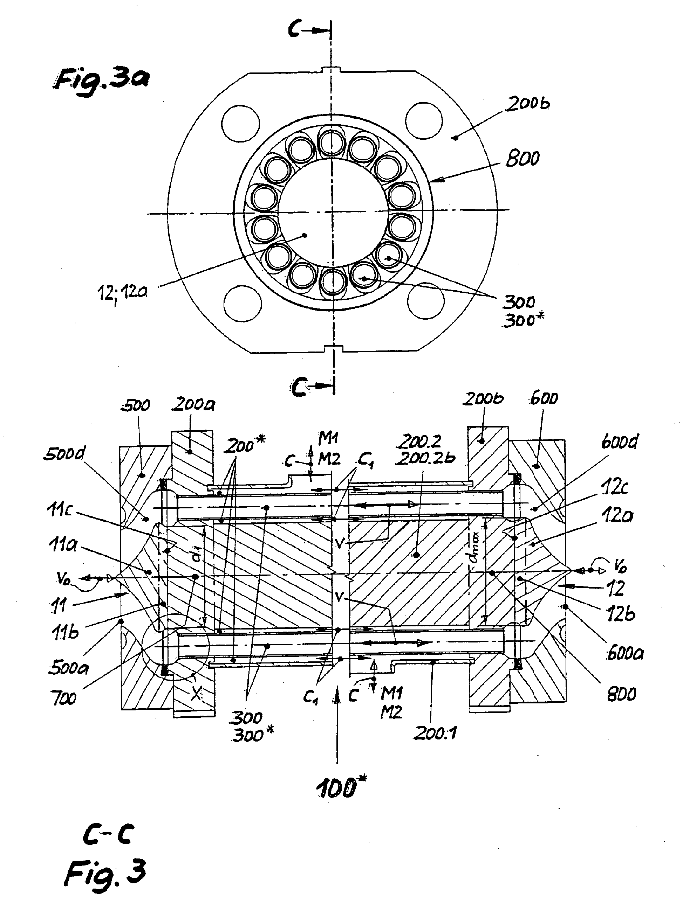

Um die erfindungsgemäße Teilaufgabe optimal zu lösen, nämlich eine thermisch besonders schonende Behandlung des Lebensmittelprodukts P sicherzustellen, was gleichbedeutend ist mit dem Lösungsmerkmal kongruenter Strömungswege für alle sich verzweigenden und vereinigenden Teilmengen des Lebensmittelprodukts P zwischen ihrer Verzweigungsstelle in dem Produkt-Eintritt E in einem Austauscherflansch 500, 600 und der Vereinigungsstelle dieser Teilmengen in die Gesamtströmung in dem Produkt-Austritt A in dem Austauscherflansch 600, 500, sind sämtliche Innenrohre 300 kreisringförmig, auf dem einzigen Kreis K und in dem als Ringraum ausgebildeten Außenkanal 200* angeordnet. Sie erstrecken sich dort in dessen Längsrichtung und sind im größtmöglichen Umfangsbereich der Rohrträgerplatte 700, 800, vorzugsweise über den Umfang des Kreise K gleichverteilt, angeordnet (**Figuren 2a****,** **3a**). Wird die vorstehend angegebene Teilaufgabe weniger scharf formuliert, dann ist auch eine kreisringförmige Anordnung der Innenrohre 300 ausreichend, bei der die Innenrohre 300 auf zwei eng beieinander liegenden Kreisen angeordnet sind, die einen relativ großen zentralen, von Innenrohren 300 freien Bereich umschließen.

Die erste Rohrträgerplatte 700 geht radial außenseits in den ersten Außenmantelflansch 200a und die zweite Rohrträgerplatte 800 geht außenseits in den zweiten Außenmantelflansch 200b über, wobei Rohrträgerplatte und Außenmantelflansch 700, 200a bzw. 800, 200b jeweils die vorstehend erwähnte einstückige Einheit bilden.

Abhängig von der Anordnung des jeweiligen Rohrbündels 100.1 bis 100.n im Rohrbündel-Wärmeaustauscher 100* und seiner jeweiligen Beschaltung können die Innenrohre 300, bezogen auf die Darstellungslage, entweder von links nach rechts oder umgekehrt von dem Lebensmittelprodukt P durchströmt werden, wobei die mittlere Strömungsgeschwindigkeit im Innenrohr 300 und damit im Innenkanal 200* mit dritter Strömungsgeschwindigkeit v gekennzeichnet ist. Die querschnittsmäßige Auslegung des Innenrohres 300 erfolgt im Rahmen der Erfindung derart, dass diese dritte Strömungsgeschwindigkeit v mindestens gleich oder vorzugsweise deutlich höher als eine erste Strömungsgeschwindigkeit v₀ in einem Verbindungsbogen oder einer Verbindungsarmatur 1000 ist, der oder die, bezogen auf das in Frage kommende Rohrbündel 100.i, einerseits in dem ersten Austauscherflansch 500 und andererseits in dem zweiten Austauscherflansch 600 endet. Der erste Austauscherflansch 500 ist über eine Flanschdichtung 900 gegen die aus erster Rohrträgerplatte 700 und erstem Außenmantelflansch (200a) gebildete Einheit abgedichtet. Entsprechendes gilt für den zweiten Austauscherflansch 600 und die zweite Rohrträgerplatte 800 in Verbindung mit dem zweiten Außenmantelflansch 200b.

Mit den beiden in der Zeichnung (**Figur 2**) nur andeutungsweise dargestellten Verbindungsbogen oder Verbindungsarmaturen 1000 (im Regelfall sog. 180 Grad-Rohrbogen) wird das in Rede stehende Rohrbündel 100.i mit dem, bezogen auf die Strömungsrichtung, jeweils oberstromig benachbarten Rohrbündel 100.i-1 und dem unterstromig benachbarten 100.i+1 in Reihe geschaltet. Daher bildet einmal der erste Austauscherflansch 500 den Produkt-Eintritt E für das Lebensmittelprodukt P und der zweite Austauscherflansch 600 beherbergt den dazugehörenden Produkt-Austritt A; beim benachbarten Rohrbündel 100.i-1 bzw. 100.i+1 kehren sich diese Ein- und Austrittsverhältnisse jeweils entsprechend um.

Im vorliegenden Ausführungsbeispiel sind die endseitigen Bereiche des Rohrbündel-Wärrneaustauschers 100*, jeweils im Anschluss an den Außenkanal 200*, spiegelbildlich formidentisch und abmessungsgleich ausgebildet, so dass sich die folgende detaillierte Beschreibung auf den einen Endbereich beschränken kann und die entsprechenden Bezugszeichen des anderen Endbereichs lediglich angeführt werden. Der Austauscherflansch 500, 600 weist auf seiner der zugeordneten Rohrträgerplatte 700, 800 abgewandten Seite eine Anschlussöffnung 500a, 600a auf, die einem Nenndurchmesser DN und damit einem Nenndurchtrittsquerschnitt A₀ des dort angeschlossenen Verbindungsbogens oder der Verbindungsarmatur 1000 entsprechen.

Die Anschlussöffnung 500a, 600a öffnet sich im Austauscherflansch 500, 600 axialsymmetrisch über einen Übergang 500b, 600b bis zu einem endseitig vorgesehenen erweiterten Durchtrittsquerschnitt 500c, 600c (**Figur 2c**). Letzterer ist dabei im Wesentlichen zylindrisch mit einem Innendurchmesser D₁ (größter Durchmesser des erweiterten Durchtrittsquerschnitts 500c, 600c) ausgeführt, wobei letzterer in der Regel ein bis zwei Nennweiten größer als der Nenndurchmesser DN des Verbindungsbogens oder der Verbindungsarmatur 1000 (Nenndurchtrittsquerschnitt Aₒ des Verbindungsbogens oder der Verbindungsarmatur) und demnach entsprechend größer als ein Gesamtdurchtrittsquerschnitt NAᵢ (**Figur 2a**) aller in den Austauscherflansch 500, 600 eintretenden Innenrohre 300 der Anzahl N mit einem jeweiligen Rohrinnendurchmesser Dᵢ (**Figur 2**) und einem Durchtrittsquerschnitt Aᵢ dimensioniert ist. Der erweiterte Durchtrittsquerschnitt 500c, 600c bildet zusammen mit dem Übergang 500b, 600b eine Innenkontur Kᵢ, Kᵢ* im Austauscherflansch 500, 600 aus.

Koaxial zur Anschlussöffnung 500a, 600a und konzentrisch zur Rohrträgerplatte 700, 800 ist ein mit dieser fest verbundener, axialsymmetrischer Verdrängerkörper 11, 12 vorgesehen (**Figuren 2, 2a, 2b****,** **2c**), der mit der durch die Anschlussöffnung 500a, 600a, den Übergang 500b, 600b und den erweiterten Durchtrittsquerschnitt 500c, 600c gebildeten Innenkontur Kᵢ, Kᵢ* einen ringförmigen Kanal 500d, 600d ausbildet. Letzterer erweitert sich von der Anschlussöffnung 500a, 600a bis zur Rohrträgerplatte 700, 800 hin in seinem jeweiligen Ringspalt-Durchtrittsquerschnitt stetig.

Der Verdrängerkörper 11, 12 ist pilzförmig ausgebildet, er besteht aus einem vorderen Teil 11a, 12a und einem in einem Verdrängerfuß 11c, 12c endenden hinteren Teil 11b, 12b, die an ihrem Verbindungsquerschnitt einen gemeinsamen größten Außendurchmesser dₘₐₓ in Form einer definierten Strömungsabrissstelle 11d, 12d bilden (**Figuren 3****,** **2c**). Der Verdrängerfuß 11 c, 12c endet unmittelbar an der Rohrträgerplatte 700, 800, und er weist dort einen Außendurchmesser d₁ auf.

Die Innenrohre 300 münden endseitig jeweils in und bündig mit einem Boden 700b, 800b einer Einlaufrinne 700a, 800a aus (**Figuren 2c****,** **2a, 2b**), die von der Seite des Austauscherflansches 500, 600 in Form einer ringförmigen Vertiefung in die Rohrträgerplatte 700, 800 eingreift. Der Boden 700b, 800b ist um einen Rücksprung r von der Stirnfläche der Rohrträgerplatte 700, 800 beabstandet. Die Einlaufrinne 700a, 800a verjüngt sich stetig, vorzugsweise symmetrisch zum Außendurchmesser des jeweiligen Innenrohres 300 hin, wobei eine konkave Verjüngung bevorzugt ist.

Zur Aufnahme des jeweiligen Endes des Innenrohres 300 in der Rohrträgerplatte 700, 800 ist eine Anschlussbohrung 700d, 800d (**Figur 2c**) vorgesehen, die in den Boden 700b, 800b ausmündet. Die Anschlussbohrung 700d, 800d ist in Form eines in die Einlaufrinne 700a, 800a eingreifenden, sich stetig zum Innenrohr 300 hin verjüngenden Einlauftrichters 700c, 800c angesenkt (**Figuren 2a****,** **3a**).

Der erweiterte Durchtrittsquerschnitt 500c, 600c geht mit seinem Innendurchmesser D₁ bündig und stetig in eine außenseitige Flanke und der Verdrängerfuß 11 c, 12c geht mit seinem endseitig ausgebildeten Außendurchmesser d₁ bündig und stetig in eine innenseitige Flanke der Einlaufrinne 700a, 800a über.

Mit dem Innendurchmesser D₁ des erweiterten Durchtrittsquerschnitts 500c, 600c und dem Außendurchmesser d₁ des Verdrängerfußes 11c, 12c ist damit der Ringspaltquerschnitt A₁ im Austauscherflansch 500, 600 und in der sich anschließenden Rohrträgerplatte 700, 800 festgelegt, und zwar ergibt sich der Ringspaltquerschnitt zu A₁ = (D₁²- d₁²) π/4. Letzterer ist im Rahmen einer vorteilhaften Ausführungsform an dieser Stelle am größten (A₁ = Aₘₐₓ).

Die Forderung nach einer geringstmöglichen Belastung des Lebensmittelprodukts P bei der Verzweigung in und der Vereinigung von Teilmengen wird sehr gut erfüllt, wenn, bezogen auf die erste Strömungsgeschwindigkeit v₀ im Verbindungsbogen oder der Verbindungsarmatur 1000, der Ringspaltquerschnitt A₁ und der Durchtrittsquerschnitt Aᵢ des Innenrohres 300 so dimensioniert werden, dass im Ringspaltquerschnitt A₁ = Aₘₐₓ eine zweite Strömungsgeschwindigkeit v₁ = vₘₐₓ = 0,5 v₀ und im Durchtrittsquerschnitt Aᵢ die dritte Strömungsgeschwindigkeit v = vₘₐₓ = 1,5 v₀ vorliegen.

Die vorstehend beschriebene Ausgestaltung des ringförmigen Kanals 500d, 600d im Austauscherflansch 500, 600 und der jeweils benachbarten Einlaufrinne 700a, 800a (s. **Figuren 2, 2b****,** **2c**) führt dazu, dass die zugeordnete Strömungsgeschwindigkeit des Lebensmittelprodukts P in den unverzweigten und den verzweigten Strömungsbereichen (v₀, v₁, v) jeweils stetig und stoßfrei geändert wird. Im Zuge der Vorbereitung der Verzweigung wird die Strömung zunächst von einem Ausgangswert der unverzweigten Strömung, der ersten Strömungsgeschwindigkeit v₀, auf einen Minimalwert der unverzweigten Strömung, der zweiten Strömungsgeschwindigkeit v₁, verzögert und anschließend wird die Strömung im Verlauf ihrer Verzweigung auf einen Maximalwert, die dritte Strömungsgeschwindigkeit v, beschleunigt. Dabei ist vorzugsweise die dritte Strömungsgeschwindigkeit v größer als die erste Strömungsgeschwindigkeit v₀. Die Vereinigung der Teilmengen des Lebensmittelprodukts P vollzieht sich sinngemäß umgekehrt.

In Abhängigkeit von der Richtung der dritten Strömungsgeschwindigkeit v im Innenrohr 300 bzw. Innenkanal 300* strömt das zu behandelnde Lebensmittelprodukt P entweder über die erste Anschlussöffnung 500a oder die zweite Anschlussöffnung 600a dem Rohrbündel 100.1 bis 100.n zu, so dass entweder die erste Rohrträgerplatte 700 oder die zweite Rohrträgerplatte 800 angeströmt wird. Da in jedem Falle ein Wärmeaustausch zwischen Lebensmittelprodukt P in den Innenrohren 300 bzw. den Innenkanälen 300* und einem ersten Heizmedium M1 oder einem zweiten Heizmedium M2 im Außenmantel 200 bzw. in dem Außenkanal 200* vorzugsweise im Gegenstrom zu erfolgen hat, strömt dieses Heizmedium M1, M2 entweder dem ersten Anschlussstutzen 400a oder aber dem zweiten Anschlussstutzen 400b mit einer Strömungsgeschwindigkeit im Außenmantel c zu.

Wird, wie dies eine bevorzugte Ausführungsform nach **Figur 2** vorsieht, der als Ringraum ausgebildete Außenkanal 200* innenseits von einem Innenmantel 200.2 in Form eines inneren Rohres 200.2a begrenzt, das sich endseitig jeweils in der Rohrträgerplatte 700; 800 abstützt, dann werden die Innenrohre 300 bzw. die Innenkanäle 300* außenseits mit einer erhöhten Strömungsgeschwindigkeit c₁ beströmt, die planmäßig und einheitlich für alle N Innenrohre 300 zu bemessen ist. Eine Intensivierung und Verbesserung des Wärmeübergangs in diesen Bereichen ist die Folge.

Entsprechende Strömungsverhältnisse und Wärmeübergangsbedingungen, wie bei der vorstehend beschriebenen Ausführungsform, werden erreicht, wenn der als Ringraum ausgebildete Außenkanal 200* innenseits von einem Innenmantel 200.2 in Form einer Innenstange 200.2b begrenzt ist, die sich endseitig jeweils in der Rohrträgerplatte 700; 800 abstützt (**Figur 3**).

Wird bei der Ausgestaltung des erfindungsgemäßen Rohrbündel-Wärmeaustauschers 100* auf eine innenseitige Begrenzung des Außenkanals 200* durch einen Innenmantel 200.2, wie in den **Figuren 2****,** **3** dargestellt und vorstehend beschrieben, verzichtet, dann bleibt der gesamte Raum innerhalb der auf dem Kreis K angeordneten Innenrohre 300 frei für die Beaufschlagung mit dem Heizmedium M1, M2. Für den Fall, dass der Wärmeübergang auf der Seite des Heizmediums M1, M2 keine den Wärmedurchgang im Rohrbündel-Wärmeaustauscher 100* limitierende Größe darstellt, kann diese einfache Ausführungsform auch im Rahmen der vorliegenden Erfindung Anwendung finden.

### BEZUGSZEICHENLISTE DER VERWENDETEN ABKÜRZUNGEN

**Figur 1**
   - 1: UHT-Anlage
   - 2: erste Fördereinrichtung
   - 3: zweite Fördereinrichtung
   - 10: Trimmerhitzer

   - 100: (regenerativer) erster Wärmeaustauscher der Vorerhitzerzone; (i = 1)
   - 100-1: (regenerativer) zweiter Wärmeaustauscher der Vorerhitzerzone; (i = 2; oberstromig des ersten Wärmeaustauschers 100 angeordnet)
   - 100-(i-1): allgemein: regenerativer i-ter Wärmeaustauscher der Vorerhitzerzone; (i = 1 bis n; i = 4 → 100-3)

   - 100+1: erster Wärmeaustauscher der Hocherhitzerzone; (i = 1)
   - 100+2: zweiter Wärmeaustauscher der Hocherhitzerzone; (i = 2; unterstromig des ersten Wärmeaustauschers 100+1 angeordnet)
   - 100+i: allgemein: i-ter Wärmeaustauscher der Hocherhitzerzone; (i = 1 bis n; i = 4 → 104)

   - HE: Hocherhitzung
   - HZ: Hocherhitzerzone

   - K1: erste Kreislaufleitung (für das regenerative erste Heizmedium M1)
   - K2: zweite Kreislaufleitung (für das zweite Heizmedium M2)
   - KL1: erster Kreislauf (regeneratives erstes Heizmedium M1)
   - KL2: zweiter Kreislauf (zweites Heizmedium M2)

   - L: Produktleitung
   - L1: erster Leitungsabschnitt (der ersten Kreislaufleitung K1)
   - L2: zweiter Leitungsabschnitt (der ersten Kreislaufleitung K1)
   - L3: dritter Leitungsabschnitt (der ersten Kreislaufleitung K1)
   - LR: Rückführleitung (für das regenerative erste Heizmedium M1)

   - M1: (regeneratives) erstes Heizmedium
   - M2: zweites Heizmedium
   - M3: drittes Heizmedium

   - P: Lebensmittelprodukt (einer Wärmebehandlung zu unterziehend)
   - P': wärmebehandeltes Lebensmittelprodukt

   - Q₁: erster Volumenstrom (erstes Heizmedium M1)
   - Q₂: zweiter Volumenstrom (zweites Heizmedium M2)
   - Q: (erhöhter) Volumenstrom (erstes Heizmedium M1 zwischen V2 und V1)
   - ΔQ: Zusatzvolumenstrom (erstes Heizmedium M1)

   - VE: Vorerhitzung
   - VZ: Vorerhitzerzone

   - V1: Verzweigungsstelle
   - V2: Vereinigungsstelle
**Figuren 2** bis **3a**
   - 11: erster Verdrängerkörper
   - 11a: vorderer Teil
   - 11b: hinterer Teil
   - 11c: erster Verdrängerfuß
   - 11d: erste Strömungsabrissstelle

   - 12: zweiter Verdrängerkörper
   - 12a: vorderer Teil
   - 12b: hinterer Teil
   - 12c: zweiter Verdrängerfuß
   - 12d: zweite Strömungsabrissstelle

   - 100*: Rohrbündel-Wärmeaustauscher, allgemein
   - 100.1, 100.2, ..., 100.i, ..., 100.n: Rohrbündel
   - 100.i: i-tes Rohrbündel
   - 100.i+1: unterstromig des Rohrbündels 100.i angeordnet
   - 100.i-1: oberstromig des Rohrbündels 100.i angeordnet

   - 200.1: Außenmantel
   - 200*: Außenkanal
   - 200a: erster Außenmantelflansch
   - 200b: zweiter Außenmantelflansch

   - 200.2: Innenmantel
   - 200.2a: inneres Rohr (Innenmantel)
   - 200.2b: Innenstange (Innenmantel)

   - 300: Innenrohr
   - 300*: Innenkanal

   - 400a: erster Anschlussstutzen
   - 400a*: erster Querkanal
   - 400b: zweiter Anschlussstutzen
   - 400b*: zweiter Querkanal

   - 500: erster Austauscherflansch
   - 500a: erste Anschlussöffnung
   - 500b: erster Übergang
   - 500c: erweiterter erster Durchtrittsquerschnitt
   - 500d: ringförmiger erster Kanal

   - 600: zweiter Austauscherflansch
   - 600a: zweite Anschlussöffnung
   - 600b: zweiter Übergang

   - 600c: erweiterter zweiter Durchtrittsquerschnitt
   - 600d: ringförmiger zweiter Kanal

   - 700: erste Rohrträgerplatte (Rohrspiegelplatte)
   - 700a: erste Einlaufrinne
   - 700b: erster Boden
   - 700c: erster Einlauftrichter
   - 700d: erste Anschlussbohrung

   - 800: zweite Rohrträgerplatte (Rohrspiegelplatte)
   - 800a: zweite Einlaufrinne
   - 800b: zweiter Boden
   - 800c: zweiter Einlauftrichter
   - 800d: zweite Anschlussbohrung

   - 900: Flachdichtung
   - 1000: Verbindungsbogen/Verbindungsarmatur

   - c: Strömungsgeschwindigkeit im Außenkanal, allgemein
   - c₁: erhöhte Strömungsgeschwindigkeit im Außenkanal; (bei Reduzierung des Durchtrittsquerschnitts des Außenkanals 200*)

   - d₁: Außendurchmesser (Verdrängerfuß 11c, 12c)
   - dₘₐₓ: größter Außendurchmesser (Verdrängerkörper 11, 12)

   - r: Rücksprung (der Innenrohre 300)

   - v = vₘₐₓ: dritte Strömungsgeschwindigkeit (im Innenrohr 300)
   - v₀: erste Strömungsgeschwindigkeit (im Verbindungsbogen/-armatur 1000)
   - v₁ = vₘᵢₙ: zweite Strömungsgeschwindigkeit (im größten Ringspaltquerschnitt des Austauscherflansches 500, 600 und der Rohrträgerplatte 700, 800)

   - A: Produkt-Austritt

   - Aᵢ: Durchtrittsquerschnitt (des Innenrohres (Aᵢ = Dᵢ²π/4))
   - NAᵢ: Gesamtdurchtrittsquerschnitt (aller parallel durchströmten Innenrohre)
   - Aₒ: Nenndurchtrittsquerschnitt (des Verbindungsbogens/-armatur)
   - A₁ = Aₘₐₓ: Ringspaltquerschnitt (größter Querschnitt (A₁ = (D₁²- d₁²) π/4))

   - Dᵢ: Rohrinnendurchmesser (Innenrohr 300)
   - D₁: Innendurchmesser (des erweiterten Durchtrittsquerschnitts 500c, 600c)
   - DN: Nenndurchmesser (des Verbindungsbogens (Aₒ = DN²π/4))

   - E: Produkt-Eintritt
   - K: Kreis

   - Kᵢ: erste Innenkontur
   - Kᵢ*: zweite Innenkontur

   - N: Anzahl (der Innenrohre 300)

## Patentansprüche

1. UHT-Anlage zur Wärmebehandlung von temperatursensiblen Lebensmittelprodukten (P), mit einer Vorerhitzerzone (VZ), die wenigstens einen ersten Wärmeaustauscher der Vorerhitzerzone (100; 100, 100-1, 100-2, ...) aufweist, der/die einerseits über eine Produktleitung (L) mit dem zu erwärmenden Lebensmittelprodukt (P) und andererseits über eine erste Kreislaufleitung (K1) mit einem regenerativ generierten ersten Heizmedium (M1) beaufschlagt ist/sind, mit einer, bezogen auf die Strömungsrichtung des Lebensmittelprodukts (P), unterstromig des ersten Wärmeaustauschers der Vorerhitzerzone (100) sich an letzteren anschließenden Hocherhitzerzone (HZ), die wenigstens einen zweiten Wärmeaustauscher der Hocherhitzerzone (100+1; 100+2, 100+3, ...) aufweist, der/die einerseits über die Produktleitung (L) mit dem Lebensmittelprodukt (P) und andererseits über eine zweite Kreislaufleitung (K2) mit einem zweiten Heizmedium (M2) beaufschlagt ist/sind, mit einem ersten Leitungsabschnitt (L1), der einen Abschnitt der ersten Kreislaufleitung (K1) bildet und der dem ersten Wärmeaustauscher der Vorerhitzerzone (100) das erste Heizmedium (M1) zuführt, und mit einem zweiten Leitungsabschnitt (L2), der einen weiteren Abschnitt der sich fortsetzenden ersten Kreislaufleitung (K1) bildet und der aus dem ersten Wärmeaustauscher der Vorerhitzerzone (100) das erste Heizmedium (M1) abführt, wobei die produktführenden Wärmeaustauscher der Vor- und Hocherhitzerzone (100, 100-1, 100-2, ... und 100+1, 100+2, 100+3, ...) jeweils als Rohrbündel-Wärmeaustauscher (100*) mit jeweils wenigstens einem Rohrbündel (100.1, 100.2, ..., 100.i, ..., 100.n) ausgebildet sind und wobei das jeweilige Rohrbündel (100.i) aus einer Gruppe von parallel geschalteten, innenseits jeweils produktdurchströmten Innenrohren (300) besteht,
**dadurch gekennzeichnet,**
• **dass** der erste Leitungsabschnitt (L1) über einen mit einem dritten Heizmedium (M3) beheizten Trimmerhitzer (10) geführt ist,
• **dass** von dem zweiten Leitungsabschnitt (L2) an einer Verzweigungsstelle (V1) eine Rückführleitung (LR) abzweigt, die, bezogen auf die Strömungsrichtung des ersten Heizmediums (M1) in dem ersten Leitungsabschnitt (L1), oberstromig des Trimmerhitzers (10) an einer Vereinigungsstelle (V2) in den ersten Leitungsabschnitt (L1) einmündet,
• **dass** in der Rückführleitung (LR) eine von der Verzweigungs- (V1) zur Vereinigungsstelle (V2) fördernde zweite Fördereinrichtung (3) angeordnet ist,
• und **dass** von den produktführenden Wärmeaustauschern der Vor- und Hocherhitzerzone (100, 100-1, ...; 100+1, 100+2, ...) wenigstens der erste Wärmeaustauscher der Vorerhitzerzone (100) derart ausgebildet ist, dass bei dem wenigstens einen Rohrbündel (100.i) sämtliche Innenrohre (300) kreisringförmig, auf einem einzigen Kreis (K) und in einem als Ringraum ausgebildeten Außenkanal (200*) angeordnet sind, sich in dessen Längsrichtung erstrecken und endseitig jeweils in einer Rohrträgerplatte (700, 800) abstützen.

2. UHT-Anlage nach Anspruch 1,
**dadurch gekennzeichnet,**
**dass** das Rohrbündel (100.1, 100.2, ..., 100.i, ..., 100.n) jeweils den von einem Außenmantel (200.1) umgebenen ringraumförmigen Außenkanal (200*) für das regenerative erste Heizmedium (M1) oder das zweite Heizmedium (M2) aufweist, dass eine Anzahl N Innenrohre (300) vorgesehen ist, die sich achs-parallel zum Außenmantel (200) durch den Außenkanal (200*) erstrecken und gemeinsam einen Innenkanal (300*) bilden, und dass ein für alle Innenrohre (300) gemeinsamer, einerseits in einem ersten Austauscherflansch (500) ausgebildeter Produkt-Eintritt (E) oder Produkt-Austritt (A) und ein gemeinsamer, andererseits in einem zweiten Austauscherflansch (600) ausgebildeter Produkt-Austritt (A) bzw. Produkt-Eintritt (E) für das Lebensmittelprodukt (P) vorgesehen sind.

3. UHT-Anlage nach einem der vorhergehenden Ansprüche,
**dadurch gekennzeichnet,**
**dass** die Innenrohre (300) des Rohrbündels (100.1, 100.2, ..., 100.i, ..., 100.n) im größtmöglichen Umfangsbereich der Rohrträgerplatte (700, 800) angeordnet sind.

4. UHT-Anlage nach einem der vorhergehenden Ansprüche,
**dadurch gekennzeichnet,**
**dass** die Innenrohre (300) des Rohrbündels (100.1, 100.2, ..., 100.i, ..., 100.n) über den Umfang des Kreises (K) gleichverteilt angeordnet sind.

5. UHT-Anlage nach einem der vorhergehenden Ansprüche,
**dadurch gekennzeichnet,**
**dass** der als Ringraum ausgebildete Außenkanal (200*) innenseits von einem Innenmantel (200.2) in Form eines inneren Rohres (200.2a) begrenzt ist, das sich endseitig jeweils in der Rohrträgerplatte (700; 800) abstützt.

6. UHT-Anlage nach einem der vorhergehenden Ansprüche,
**dadurch gekennzeichnet,**
**dass** der als Ringraum ausgebildete Außenkanal (200*) innenseits von einem Innenmantel (200.2) in Form einer Innenstange (200.2b) begrenzt ist, die sich endseitig jeweils in der Rohrträgerplatte (700; 800) abstützt.

7. UHT-Anlage nach einem der Ansprüche 2 bis 6,
**dadurch gekennzeichnet,**
**dass** der Austauscherflansch (500; 600) auf seiner der zugeordneten Rohrträgerplatte (700; 800) abgewandten Seite eine Anschlussöffnung (500a; 600a) aufweist, dass sich letztere im Austauscherflansch (500; 600) axialsymmetrisch über einen Übergang (500b; 600b) bis zu einem endseitig vorgesehenen erweiterten Durchtrittsquerschnitt (500c; 600c) öffnet, dass koaxial zur Anschlussöffnung (500a; 600a) und konzentrisch zur Rohrträgerplatte (700; 800) ein mit dieser fest verbundener, axialsymmetrischer Verdrängerkörper (11; 12) vorgesehen ist, der mit einer durch die Anschlussöffnung (500a; 600a), den Übergang (500b; 600b) und den erweiterten Durchtrittsquerschnitt (500c; 600c) gebildeten Innenkontur (Kᵢ; Kᵢ*) einen ringförmigen Kanal (500d; 600d) ausbildet.

8. UHT-Anlage nach Anspruch 7,
**dadurch gekennzeichnet,**
**dass** sich der ringförmige Kanal (500d; 600d) von der Anschlussöffnung (500a, 600a) bis zur Rohrträgerplatte (700: 800) hin in seinem jeweiligen Ringspalt-Durchtrittsquerschnitt stetig erweitert.

9. UHT-Anlage nach Anspruch 7 oder 8,
**dadurch gekennzeichnet,**
**dass** der Verdrängerkörper (11; 12) pilzförmig ausgebildet ist, dass er aus einem vorderen Teil (11a; 12) und einem in einem Verdrängerfuß (11c; 12c) endenden hinteren Teil (11b; 12b) besteht, die an ihrem Verbindungsquerschnitt einen gemeinsamen größten Außendurchmesser (dₘₐₓ) in Form einer definierten Strömungsabrissstelle (11d; 12d) bilden, und dass der Verdrängerfuß (11c; 12c) unmittelbar an der Rohrträgerplatte (700; 800) endet.

10. UHT-Anlage nach einem der Ansprüche 2 bis 9,
**dadurch gekennzeichnet,**
**dass** die Innenrohre (300) endseitig jeweils in und bündig mit einem Boden (700b; 800b) einer Einlaufrinne (700a; 800a) ausmünden, die von der Seite des Austauscherflansches (500; 600) in Form einer ringförmigen Vertiefung in die Rohrträgerplatte (700; 800) eingreift, und dass der Boden (700b; 800b) um einen Rücksprung (r) von der Stirnfläche der Rohrträgerplatte (700; 800) beabstandet ist.

11. UHT-Anlage nach Anspruch 10,
**dadurch gekennzeichnet,**
**dass** sich die Einlaufrinne (700a; 800a) symmetrisch zum Außendurchmesser des jeweiligen Innenrohres (300) hin stetig verjüngt.

12. UHT-Anlage nach Anspruch 10 oder 11,
**dadurch gekennzeichnet,**
**dass** das jeweilige Innenrohr (300) in einer Anschlussbohrung (700d; 800d) im Boden (700b; 800b) Aufnahme findet, die in Form eines in die Einlaufrinne (700a; 800a) eingreifenden, sich stetig zum Innenrohr (300) hin verjüngenden Einlauftrichters (700c; 800c) angesenkt ist.

13. UHT-Anlage nach einem der Ansprüche 9 bis 12,
**dadurch gekennzeichnet,**
**dass** der erweiterte Durchtrittsquerschnitt (500c; 600c) mit seinem Innendurchmesser (D₁) bündig und stetig in eine außenseitige Flanke und der Verdrängerfuß (11c; 12c) mit seinem endseitig ausgebildeten Außendurchmesser (d₁) bündig und stetig in eine innenseitige Flanke der Einlaufrinne (700a; 800a) übergehen.

14. UHT-Anlage nach einem der Ansprüche 2 bis 13,
**dadurch gekennzeichnet,**
**dass** die endseitigen Bereiche des Rohrbündel-Wärmeaustauschers (100*), zumindest jeweils im Anschluss an den Außenkanal (200*), spiegelbildlich formidentisch und abmessungsgleich ausgebildet sind.

15. Verfahren zur Wärmebehandlung von temperatursensiblen Lebensmittelprodukten in einer UHT-Anlage (1) gemäß Anspruch 1 mit einer Vorerhitzung (VE) und einer sich anschließenden Hocherhitzung (HE) des zu erwärmenden Lebensmittelprodukts (P), mit einem regenerativ generierten, in einem ersten Kreislauf (KL1) durch die UHT-Anlage (1) geführten ersten Heizmedium (M1) für die Vorerhitzung (VE) und mit einem in einem zweiten Kreislauf (KL2) geführten zweiten Heizmedium (M2) für die Hocherhitzung (HE),
**dadurch gekennzeichnet,**
• **dass** eine Eintrittstemperatur des Lebensmittelprodukts (P) vor Eintritt in die Hocherhitzung (HE) durch zusätzliche Beheizung des ersten Heizmediums (M1) mittels eines dritten Heizmediums (M3) an die Erfordernisse der Hocherhitzung (HE) angepasst wird,
• **dass** die zusätzliche Beheizung des ersten Heizmediums (M1) vor dessen Eintritt in die Vorerhitzung (VE) erfolgt,
• **dass** das erste Heizmedium (M1) im Bereich seiner zusätzlichen Beheizung und seiner anschließenden Verwendung in der Vorerhitzung (VE) mit einem Volumenstrom (Q) gefördert wird, der gegenüber dem im gesamten ersten Kreislauf (KL1) der UHT-Anlage (1) vorliegende ersten Volumenstrom (Q₁) des ersten Heizmediums (M1) erhöht ist,
• und **dass** alle sich in der Vorerhitzung (VE) und anschließenden Hocherhitzung (HE) jeweils verzweigenden und vereinigenden Teilmengen des Lebensmittelprodukts (P) wenigstens in der Vorerhitzung (VE) die gleiche Verweilzeit erfahren.

16. Verfahren nach Anspruch 15,
**dadurch gekennzeichnet,**
**dass** die zusätzliche Beheizung des ersten Heizmediums (M1) zeitlich begrenzt oder begrenzbar steuerbar ist.

17. Verfahren nach Anspruch 15 oder 16,
**dadurch gekennzeichnet,**
**dass** die Verwendung des zusätzlich beheizten ersten Heizmediums (M1) auf einen unmittelbar oberstromig der Hocherhitzung (HE) angeordneten Teilbereich der Vorerhitzung (VE) beschränkt ist.

18. Verfahren nach einem der Ansprüche 15 bis 17,
**dadurch gekennzeichnet,**
**dass** der Volumenstrom (Q) annähernd gleich einem zweiten Volumenstrom (Q₂) des zweiten Heizmediums (M2) der Hocherhitzung (HE) ist.

19. Verfahren nach einem der Ansprüche 15 bis 18,
**dadurch gekennzeichnet,**
**dass** die Wärmeübergangsbedingungen in dem von der zusätzlichen Beheizung des ersten Heizmediums (M1) umfassten Bereich der Vorerhitzung (VE) auf der Seite des Lebensmittelprodukts (P) den Wärmeübergangsbedingungen auf der Seite des ersten Heizmediums (M1) entsprechend angepasst sind.

20. Verfahren nach einem der Ansprüche 15 bis 19,
**dadurch gekennzeichnet,**
**dass** die jeweilige Strömungsgeschwindigkeit des Lebensmittelprodukts (P) in den unverzweigten und den verzweigten Strömungsbereichen stetig und stoßfrei geändert wird, dass im Zuge der Vorbereitung der Verzweigung die Strömung zunächst von einem Ausgangswert der unverzweigten Strömung, der ersten Strömungsgeschwindigkeit v₀, auf einen Minimalwert der unverzweigten Strömung, der zweiten Strömungsgeschwindigkeit v₁, verzögert und anschließend die Strömung im Verlauf ihrer Verzweigung auf einen Maximalwert, die dritte Strömungsgeschwindigkeit v, beschleunigt wird, dass die dritte Strömungsgeschwindigkeit v größer als die erste Strömungsgeschwindigkeit v₀ ist, und dass sich die Vereinigung der Teilmengen des Lebensmittelprodukts (P) sinngemäß umgekehrt vollzieht.

21. Verfahren nach einem der Ansprüche 15 bis 20,
**dadurch gekennzeichnet,**
**dass** das Lebensmittelprodukt (P) ein Dessert oder ein dessertartiges Produkt ist.

## Claims

1. A UHT system for heat treating temperature-sensitive food products (P), with a pre-heating zone (VZ) which has at least one first heat exchanger of the pre-heating zone (100; 100, 100-1, 100-2, .....) which is/are impinged by the food product to be heated (P) via a product line (L) on the one hand, and by a regeneratively generated first heating medium (M1) via a first circuit line (K1) on the other hand, with a high-heating zone (HZ) joining the first heat exchanger of the pre-heating zone (100) downstream with respect to the flow direction of the food product (P) and comprising at least one second heat exchanger of the high-heating zone (100+1; 100+2, 100+3, ....) which is/are impinged by the food product (P) via the product line (L) on the one hand, and by a second heating medium (M2) via a second circuit line (K2) on the other hand, with a first line section (L1) which forms a section of the first circuit line (K1) and which supplies the first heating medium (M1) to the first heat exchanger of the pre-heating zone (100), and with a second line section (L2) which forms a further section of the continuing first circuit line (K1) and which conducts the first heating medium (M1) away from the first heat exchanger of the pre-heating zone (100), wherein the product-conducting heat exchangers of the pre-heating and the high-heating zones (100, 100-1, 100-2, .... and 100+1, 100+2, 100+3, ....) are each one designed as tube bundle heat exchangers (100*) each having at least one tube bundle (100.1, 100.2, ...., 100.i, ...., 100.n), and wherein the respective tube bundle (100.1) consists of a group of parallel connected inner tubes (300), each flown through by product at the inner side,
**characterised in that**
• the first line section (L1) is conducted across a trimming heater (10) heated by means of a third heating medium (M3),
• a return line (LR) branches off from the second line section (L2) at a branch point (V1), the return line opening into the first line section (L1) at a union point upstream of the trimming heater (10) with respect to the flow direction of the first heating medium (M1) in the first line section (L1),
• a second conveying device (3) that conveys from the branch point (V1) to the union point (V2) is arranged in the return line (LR),
• and of the product-conducting heat exchangers of the of the pre-heating and the high-heating zones (100, 100-1, ....; 100+1; 100+2,....) at least the first heat exchanger of the pre-heating zone (100) is designed such that, for the at least one tube bundle (100.i), all inner tubes (300) are arranged in the shape of a circular ring, on a single circle (K), and, in an outer channel (200*) designed as an annular chamber, they extend in the longitudinal direction of the outer channel and are supported at each end in a tube support plate (700, 800).

2. The UHT system according to claim 1,
**characterised in that**
each tube bundle (100.1, 100.2, ...., 100.i, ...., 100.n) comprises the outer channel (200*) in the shape of an annular chamber and surrounded by an outer shell (200.1) for the regenerative first heating medium (M1) or the second heating medium (M2), that a number N of inner tubes (300) is provided, which extend through the outer channel (200*) axis parallel to the outer shell (200) and form an inner channel (300*) together, and that one product inlet (E) or product outlet (A), common for all inner tubes (300) and formed in a first exchanger flange (500) at the one side, and one common product outlet (A) or product inlet (E), respectively, formed in a second exchanger flange (600) at the other side, are provided for the food product (P).

3. A UHT system according to any one of the preceding claims,
**characterised in that**
the inner tubes (300) of the tube bundle (100.1, 100.2, ...., 100.i, ...., 100.n) are arranged in the maximum possible perimeter area of the tube support plate (700, 800).

4. A UHT system according to any one of the preceding claims,
**characterised in that**
the inner tubes (300) of the tube bundle (100.1, 100.2, ...., 100.i, ...., 100.n) are arranged at equal distances over the perimeter of the circle (K).

5. A UHT system according to any one of the preceding claims,
**characterised in that**
the outer channel (200*) designed as an annular chamber is limited at the inner side by an inner shell (200.2) in the form of an inner tube (200.2a), which is supported in the respective tube support plate (700, 800) at each end.

6. A UHT system according to any one of the preceding claims,
**characterised in that**
the outer channel (200*) designed as an annular chamber is limited at the inner side by an inner shell (200.2) in the form of an inner rod (200.2b), which is supported in the respective tube support plate (700; 800) at each end.

7. A UHT system according to any one of claims 2 to 6,
**characterised in that**
the exchanger flange (500; 600) has an attachment opening (500a; 600a) at the side turned away from the associated tube support plate (700; 800), that the latter axis symmetrically opens itself in the exchanger flange (500; 600) via a transition (500b; 600b) up to an enlarged opening cross section (500c; 600c) provided at the ends, that an axis symmetrical displacer (11; 12), coaxial to the attachment opening (500a; 600a) and concentric to the tube support plate (700; 800) and fixedly connected to the latter is provided, which forms a ring-shaped channel (500d; 600d) with its inner contour (Kᵢ; Kᵢ*) formed by the attachment opening (500a; 600a), the transition (500b; 600b) and the enlarged opening cross section (500c; 600c).

8. A UHT system according to claim 7,
**characterised in that**
the ring-shaped channel (500d; 600d) continuously increases in its respective ring gap opening cross section from the attachment opening (500a; 600a) up to the tube support plate (700; 800).

9. A UHT system according to claim 7 or 8,
**characterised in that**
the displacer (11; 12) is designed in mushroom shape, that it consists of a front portion (11a; 12) and a rear portion (11b; 12b) ending in a displacer foot (11c; 12c), which form a common maximum outer diameter (dₘₐₓ) in the form of a defined flow breakdown point (11d; 12d) at their connection cross section, and that the displacer foot (11c; 12;) ends immediately at the tube support plate (700; 800).

10. A UHT system according to any one of claims 2 to 9,
**characterised in that**
at each end, the inner tubes (300) open into and are flush with a bottom (700b; 800b) of an inlet groove (700a; 800a) which engages into the tube support plate (700; 800) in the form of a circular deepening from the side of the exchanger flange (500; 600), and that the bottom (700b; 800b) is spaced apart from the front surface of the tube support plate (700; 800) about a recess (r).

11. A UHT system according to claim 10,
**characterised in that**
the inlet groove (700a; 800a) tapers continuously and symmetrically towards the outer diameter of the respective inner tube (300).

12. A UHT system according to claim 10 or 11,
**characterised in that**
the respective inner tube (300) is received in an attachment bore (700d; 800d) in the bottom (700b; 800b), which is countersunk in the form of an inlet funnel (700c; 800c) engaging into the inlet groove (700a; 800a) and continuously tapering towards the inner tube (300).

13. A UHT system according to any one of claims 9 to 12,
**characterised in that**
the enlarged opening cross section (500c; 600c) merges flush and continuously with its inner diameter (D₁) into a flank at the outer side of the inlet groove (700a; 800a), and the displacer foot (11c; 12c) merges flush and continuously into a flank at the inner side thereof with its outer diameter (d₁) formed at its end.

14. A UHT system according to any one of claims 2 to 13,
**characterised in that**
the end areas of the tube bundle heat exchanger (100*) are designed inversely identical in shape and equal in dimensions, at least where they join the outer channel (200*)

15. A method for heat treating temperature-sensitive food products in a UHT system (1) with a pre-heating (VE) and a subsequent high-heating (HE) of the food product (P) to be heated, with a regeneratively generated first heating medium (M1) for the pre-heating (VE), conducted through the UHT system (1) in a first circuit (KL1), and a second heating medium (M2) for high-heating (HE), conducted in a second circuit (KL2),
caracterised in that
• an entrance temperature of the food product (P) is adjusted to the requirements of the high-heating (HE) before the entry into the high-heating (HE) by additional heating of the first heating medium (M1) by means of a third heating medium (M3),
• that the additional heating of the first heating medium (M1) takes place before its entry into the pre-heating (VE),
• that in the area of its additional heating and its subsequent utilisation in the pre-heating (VE), the first heating medium (M1) is conveyed with a volume flow (Q) which is increased with respect to the first volume flow (Q₁) of the first heating medium (M1) present in the entire first circuit (KL1) of the UHT system (1),
• and that all partial amounts of the food product (P) branching and uniting in the pre-heating (VE) and subsequent high-heating (HE) experience the same dwell time at least in the pre-heating (VE).

16. The method according to claim 15,
**characterised in that**
the additional heating of the first heating medium (M1) is limited in time or controllable so as to be limited.

17. A method according to claim 15 or 16,
**characterised in that**
the utilisation of the additionally heated first heating medium (M1) is limited to a partial area of the pre-heating (VE) disposed immediately upstream of the high-heating (HE).

18. A method according to any one of claims 15 to 17,
**characterised in that**
the volume flow (Q) is approximately equal to a second volume flow (Q₂) of the second heating medium (M2) of the high-heating (HE).

19. A method according to any one of claims 15 to 18,
**characterised in that**
at the side of the food product (P), the heat transfer conditions in the area of the pre-heating (VE) comprised by the additional heating of the first heating medium (M1) are correspondingly adjusted to the heat transfer conditions at the side of the first heating medium (M1).

20. A method according to any one of claims 15 to 19,
**characterised in that**
the respective flow velocity of the food product (P) in the unbranched and the branched flow areas is changed continuously and without jumps, that in the course of the preparation of branching, the flow is at first delayed from a starting value of the unbranched flow, namely the first flow velocity v₀, to a minimum value of the unbranched flow, namely the second flow velocity v₁, and subsequently the flow is accelerated to a maximum value in the course of its branching, namely the third flow velocity v, that the third flow velocity v is greater than the first flow velocity v₀, and that the union of the partial amounts of the food product (P) takes place in an analogously reverse manner.

21. A method according to any one of claims 15 to 20,
**characterised in that**
the food product is a dessert or a dessert-like product.

## Revendications

1. Installation d'Upérisation à Haute Température (UHT), pour le traitement thermique de produits alimentaires sensibles à la température (P) avec une zone de dispositif de préchauffage (VZ) qui comporte au moins un premier échangeur de chaleur de la zone de dispositif de préchauffage (100 ; 100, 100-1, 100-2,...) recevant d'une part le produit alimentaire à chauffer (P) via une conduite de produit (L) et d'autre part un premier fluide de chauffage (M1) généré par régénération via une première conduite de circuit (K1), avec une zone de dispositif de chauffage à haute température (HZ), connectée au premier échangeur de chaleur de la zone du dispositif de préchauffage (100) en aval selon la direction d'écoulement du produit alimentaire (P), qui comporte au moins un deuxième échangeur de chaleur de la zone du dispositif de chauffage à haute température (100+1 ; 100+2, 100+3,...) recevant d'une part le produit alimentaire (P) via la conduite de produit (L) et d'autre part un deuxième fluide de chauffage (M2) via une deuxième conduite de circuit (K2), avec une première section de conduite (L1) qui constitue une section de la première conduite de circuit (K1) et fournit le premier fluide de chauffage (M1) au premier échangeur de chaleur de la zone du dispositif de préchauffage (100), ainsi qu'une deuxième section de conduite (L2) qui constitue une autre section d'extension de la première conduite de circuit (K1) et qui évacue le premier fluide de chauffage (M1) du premier échangeur de chaleur de la zone du dispositif de préchauffage (100), dans laquelle les échangeurs de chaleur conduisant le produit de la zone des dispositifs de préchauffage et de chauffage à haute température (100, 100-1, 100-2,... et 100+1, 100+2, 100+3,...) sont chacun constitués comme des échangeurs de chaleur à faisceau de tubes (100*) comportant chacun au moins un faisceau de tubes (100.1, 100.2,..., 100.i, 100.n) et dans laquelle chaque faisceau de tubes (100.i) est constitué d'un groupe de tubes internes (300) connectés en parallèle parcourus intérieurement par le produit,
**caractérisée**
• **en ce que** la première section de conduite (L1) passe par un dispositif de chauffage de régulation (10) chauffé par un troisième fluide de chauffage (M3),
• **en ce qu'**à partir de la deuxième section de conduite (L2), une conduite de retour (LR) est embranchée à un point de divergence (V1) et aboutit dans la première section de conduite (L1) en amont du dispositif de chauffage de régulation (10), selon la direction d'écoulement du premier fluide de chauffage (M1), à un point de convergence (V2) dans la première section de conduite (L1),
• **en ce qu'**un deuxième dispositif d'alimentation (3) allant du point de divergence (V1) au point de convergence (V2) est agencé dans la conduite de retour (LR),
• et **en ce qu'**au moins le premier échangeur de chaleur de la zone du dispositif de préchauffage (100) des échangeurs de chaleur contenant le produit de la zone des dispositifs de préchauffage et de chauffage à haute température (100, 100-1, 100+1, 100+2,...) est constitué de telle sorte que tous les tubes internes (300) de l'au moins un faisceau de tubes (100.i) sont agencés pour former un circuit unique (K) et dans un canal externe (200*) constitué comme une chambre annulaire, s'étendent dans le sens longitudinal de celui-ci, et sont supportés dans une plaque d'appui de tube (700, 800) à leurs extrémités respectives.

2. Installation UHT selon la revendication 1,
**caractérisée**
**en ce que** le faisceau de tubes (100.1, 100.2,..., 100.i, 100.n) comporte respectivement le canal externe en forme de chambre annulaire (200*) entouré par un manchon externe (200.1) pour le premier fluide de chauffage de régénération (M1) ou le deuxième fluide de chauffage (M2), en ce que sont pourvus une quantité N de tubes internes (300) qui s'étendent parallèlement à l'axe du manchon externe (200) à travers le canal externe (200*) et forment ensemble un canal interne (300*), et en ce que sont pourvus d'une part une entrée de produit (E) ou une sortie de produit (A) commune pour tous les tubes internes (300), constituée dans une première bride d'échangeur (500), et d'autre part une sortie de produit (A) ou une entrée de produit (E) respective commune pour le produit alimentaire (P), constituée dans une deuxième bride d'échangeur (600).

3. Installation UHT selon l'une des revendications précédentes,
**caractérisée**
**en ce que** les tubes internes (300) du faisceau de tubes (100.1, 100.2,..., 100.i,..., 100.n) sont agencés sur la plus grande circonférence possible de la plaque d'appui de tube (700, 800).

4. Installation UHT selon l'une des revendications précédentes,
**caractérisée**
**en ce que** les tubes internes (300) du faisceau de tubes (100.1, 100.2, 100.i,..., 100.n) sont agencés uniformément sur la circonférence du cercle (K).

5. Installation UHT selon l'une des revendications précédentes,
**caractérisée**
**en ce que** le canal externe (200*) constitué comme une chambre annulaire est délimité intérieurement par un manchon interne (200.2) sous forme de tube interne (200.2a) qui est supporté dans la plaque d'appui de tube (700 ; 800) à ses extrémités respectives.

6. Installation UHT selon l'une des revendications précédentes,
**caractérisée**
**en ce que** le canal externe (200*) constitué comme une chambre annulaire est délimité intérieurement par un manchon interne (200.2) sous forme de barre interne (200.2b) qui est supporté dans la plaque d'appui de tube (700 ; 800) à ses extrémités respectives.

7. Installation UHT selon l'une des revendications 2 à 6,
**caractérisée**
**en ce que** la bride d'échangeur (500 ; 600) comporte sur son côté opposé à la plaque d'appui de tube associée (700 ; 800) une ouverture de connexion (500a ; 600a), en ce que cette dernière s'ouvre dans la bride d'échangeur (500 ; 600) en symétrie axiale via une jonction (500b ; 600b) jusqu'à une section de passage élargie (500c ; 600c) pourvue à une extrémité, en ce qu'un corps de déplaceur (11 ; 12) à symétrie axiale qui lui est fermement connecté est pourvu coaxialement par rapport à l'ouverture de connexion (500a ; 600a) et concentriquement par rapport à la plaque d'appui de tube (700 ; 800), qui constitue un canal annulaire (500d ; 600d) avec un contour interne (Ki ; Ki*) constitué par l'ouverture de connexion (500a ; 600a), la jonction (500b ; 600b) et la section de passage élargie (500c ; 600c).

8. Installation UHT selon la revendication 7,
**caractérisée**
**en ce que** la section de passage de l'intervalle annulaire respectif du canal annulaire (500d ; 600d) s'élargit uniformément depuis l'ouverture de connexion (500a ; 600a) jusqu'à la plaque d'appui de tube (700 ; 800).

9. Installation UHT selon la revendication 7 ou 8,
**caractérisée**
**en ce que** le corps de déplaceur (11 ; 12) présente une forme de champignon, en ce qu'il consiste en une partie avant (11a ; 12) et une partie arrière (11b ; 12b) qui termine en un pied de déplaceur (11c ; 12c), qui présentent à leur section de connexion un diamètre externe maximal commun (dmax) sous forme d'une position de rupture d'écoulement définie (11d ; 12d), et en ce que le pied de déplaceur (11c ; 12c) se termine immédiatement à la plaque d'appui de tube (700 ; 800).

10. Installation UHT selon l'une des revendications 2 à 9,
**caractérisée**
**en ce que** les tubes internes (300) débouchent et affleurent à leurs extrémités respectives dans le fond (700b ; 800b) d'une gorge d'entrée (700a ; 800a), qui pénètre depuis le côté de la bride d'échangeur (500 ; 600) sous forme d'un enfoncement annulaire dans la plaque d'appui de tube (700 ; 800), et en ce que le fond (700b ; 800b) est espacé de la face arrière de la plaque d'appui de tube (700 ; 800) sur la distance d'un retrait (r).

11. Installation UHT selon la revendication 10,
**caractérisée**
**en ce que** la gorge d'entrée (700a ; 800a) se rétrécit uniformément de manière symétrique par rapport au diamètre externe du tube interne (300) respectif.

12. Installation UHT selon la revendication 10 ou 11,
**caractérisée**
**en ce que** le tube interne respectif (300) est logé dans un perçage de connexion (700d ; 800d) dans le fond (700b ; 800b) qui est noyé sous forme d'un entonnoir d'entrée (700c ; 800c) pénétrant dans la gorge d'entrée (700a ; 800a) et se rétrécissant uniformément vers le tube interne (300).

13. Installation UHT selon l'une des revendications 9 à 12,
**caractérisée**
**en ce que** le diamètre interne (D₁) de la section de passage élargie (500c ; 600c) passe de façon affleurante et uniforme dans un flanc du côté externe et le diamètre externe (d₁) d'extrémité du pied de déplaceur (11c ; 12c) passe de façon affleurante et uniforme dans un flanc du côté interne de la gorge d'entrée (700a ; 800a).

14. Installation UHT selon l'une des revendications 2 à 13,
**caractérisée**
**en ce que**, au moins à la connexion respective au canal externe (200*), les parties d'extrémité de l'échangeur de chaleur à faisceau de tubes (100*) sont constituées avec une forme identique en image miroir et des dimensions identiques.

15. Procédé de traitement thermique de produits alimentaires sensibles à la température dans une installation UHT (1) selon la revendication 1, comportant un préchauffage (VE) et un chauffage à haute température subséquent (HE) du produit alimentaire à chauffer (P), avec un premier fluide de chauffage (M1) pour le préchauffage (VE) généré par régénération circulant à travers l'installation UHT (1) dans un premier circuit (KL1) et avec un deuxième fluide de chauffage (M2) pour le chauffage à haute température (HE) circulant dans un deuxième circuit (KL2),
**caractérisé**
• **en ce qu'**une température d'entrée du produit alimentaire (P) est adaptée aux exigences du chauffage à haute température (HE) avant l'entrée dans le chauffage à haute température (HE) par un chauffage additionnel du premier fluide de chauffage (M1) à l'aide d'un troisième fluide de chauffage (M3),
• **en ce que** le chauffage additionnel du premier fluide de chauffage (M1) se produit avant son entrée dans le préchauffage (VE),
• **en ce que** le premier fluide de chauffage (M1) est alimenté dans la partie de son chauffage additionnel et de son utilisation subséquente dans le préchauffage (VE) avec un débit (Q) supérieur au premier débit (Q₁) du premier fluide de chauffage (M1) circulant dans l'ensemble du premier circuit (KL1) de l'installation UHT (1),
• et **en ce que** toutes les portions du produit alimentaire (P) divergées et convergées durant le préchauffage (VE) et le chauffage à haute température (HE) subséquent sont soumises à un même temps de séjour au moins pour le préchauffage (VE).

16. Procédé selon la revendication 15,
**caractérisé**
**en ce que** le chauffage additionnel du premier fluide de chauffage (M1) peut être contrôlé avec une durée délimitée ou délimitable.

17. Procédé selon la revendication 15 ou 16,
**caractérisé**
**en ce que** l'utilisation du premier fluide de chauffage (M1) à chauffage additionnel est limitée à une partie du préchauffage (VE) agencée immédiatement en amont du chauffage à haute température (HE).

18. Procédé selon l'une des revendications 15 à 17,
**caractérisé**
**en ce que** le débit (Q) est approximativement égal à un deuxième débit (Q₂) du deuxième fluide de chauffage (M2) du chauffage à haute température (HE).

19. Procédé selon l'une des revendications 15 à 18,
**caractérisé**
**en ce que** les conditions de transfert de chaleur du côté du produit alimentaire (P) dans la partie du préchauffage (VE) comprenant le chauffage additionnel du premier fluide de chauffage (M1) sont adaptées de façon correspondante aux conditions de transfert de chaleur du coté du premier fluide de chauffage (M1).

20. Procédé selon l'une des revendications 15 à 19,
**caractérisé**
**en ce que** la vitesse d'écoulement respective du produit alimentaire (P) dans les parties d'écoulement non divergées et divergées est modifiée de manière uniforme et sans à-coups, en ce qu'au cours de la préparation de la divergence, l'écoulement est d'abord réduit depuis une valeur initiale de l'écoulement non divergé, soit la première vitesse d'écoulement v₀, jusqu'à une valeur minimale de l'écoulement non divergé, soit la deuxième vitesse d'écoulement v₁, et qu'ensuite l'écoulement est accéléré au cours de sa divergence jusqu'à une valeur maximale, soit la troisième vitesse d'écoulement v, en ce que la troisième vitesse d'écoulement v est supérieure à la première vitesse d'écoulement v₀, et en ce que la convergence des portions de produit alimentaire (P) est mise en oeuvre en sens inverse de façon correspondante.

21. Procédé selon l'une des revendications 15 à 20,
**caractérisé**
**en ce que** le produit alimentaire (P) est un dessert ou un produit de type dessert.
